# EUROPEAN PATENT SPECIFICATION

(11) **EP 3 040 894 B1**
(45) Date of publication and mention of the grant of the patent: **25.03.2020**
(21) Application number: 15189151.2
(22) Date of filing: 09.10.2015
(51) Int. Cl.: G06F 21/32, G06Q 30/02, G06Q 20/20, G06Q 20/40, G07G 1/00

(54) **INFORMATION PROCESSING SYSTEM, AND STORAGE MEDIUM WHICH STORES INFORMATION PROCESSING PROGRAM**
INFORMATIONSVERARBEITUNGSSYSTEM UND SPEICHERMEDIUM MIT DARAUF GESPEICHERTEM INFORMATIONSVERARBEITUNGSPROGRAMM
SYSTÈME DE TRAITEMENT D'INFORMATIONS ET SUPPORT DE STOCKAGE POUR PROGRAMME DE TRAITEMENT D'INFORMATIONS

(30) Priority: 29.12.2014 US 201414584620; 09.07.2015 JP 2015137830
(43) Date of publication of application: 06.07.2016
(73) Proprietor: Toshiba Tec Kabushiki Kaisha, Shinagawa-ku Tokyo 141-8562 (JP)
(72) Inventor: TAIRA, Kazuki, Shinagawa-ku, Tokyo 141-8562 (JP); SAWADA, Takayuki, Shinagawa-ku, Tokyo 141-8652 (JP)
(74) Representative: Bandpay & Greuter

(56) References cited:
- US-A1- 2013 030 875
- US-A1- 2014 039 950

## Description

### FIELD

Embodiments described herein relate generally to an information processing system and a storage medium which stores an information processing program.

### BACKGROUND

Conventionally, some information processing systems for customer management, etc. use face authentication. A face authentication process requires a longer time as the amount of registered information, which is number of the customers in a referenced face database, is larger. In addition, some information processing systems using face authentication compensate an erroneous recognition rate (FRR (false rejection rate), FAR (false acceptance rate)) of face authentication by a human operation. However, a face authentication process, which presupposes a human operation, is difficult to apply to an information processing system including a settlement process by a self-checkout POS system.

Document US 2013030875 A1 described a system for detecting abnormalities in a store management. This system used a face authentication system for detecting abnormalities.

However, this system does not able any settlement through a self-check-out POS. The settlement is realized by a cashier whose performances in term of customer waiting time for settlement can be evaluated by the system.

### BRIEF DESCRIPTION OF THE DRAWINGS

FIG. 1 is a view which schematically illustrates a configuration example of an information processing system according to a first embodiment.
FIG. 2 is a block diagram illustrating a hardware configuration example of respective devices which constitute the information processing system of the first embodiment.
FIG. 3A is a view for describing process functions by the information processing system of the first embodiment.
FIG. 3B is a view illustrating a modification of the process functions by the information processing system of the first embodiment.
FIG. 4 is a flowchart for describing the flow of an information storage process in the information processing system of the first embodiment.
FIG. 5 is a flowchart for describing the flow of a settlement process in the information processing system of the first embodiment.
FIG. 6 is a block diagram illustrating a hardware configuration example of an information processing system according to a second embodiment.
FIG. 7 is a view illustrating a first concrete example of the information processing system of the second embodiment.
FIG. 8 is a view illustrating a second concrete example of the information processing system of the second embodiment.
FIG. 9A is a view for describing process functions by the information processing system of the second embodiment.
FIG. 9B is a view illustrating a modification of the process functions by the information processing system of the second embodiment.
FIG. 10 is a flowchart for describing the flow of an information storage process in the information processing system of the second embodiment.
FIG. 11 is a flowchart for describing the flow of a first process example as a settlement process in the information processing system of the second embodiment.
FIG. 12 is a flowchart for describing the flow of a second process example as a settlement process in the information processing system of the second embodiment.
FIG. 13 is a block diagram illustrating a hardware configuration example of an information processing system according to a third embodiment.
FIG. 14 is a view illustrating a configuration example of a settlement terminal according to the third embodiment.
FIG. 15 is a flowchart for describing the flow of a settlement process in the information processing system of the third embodiment.
FIG. 16 is a flowchart for describing a commodity recognition process according to the third embodiment.
FIG. 17 is a view illustrating a modification of the information processing system of the third embodiment.

### DETAILED DESCRIPTION

The invention is defined by the appended claims. In general, according to one embodiment, an information processing system includes a first interface, a first processor, a second interface, and a second processor. The first interface acquires information including face information of a visitor. The first processor executes face authentication between the face information of the visitor included in the information acquired by the first interface and registered face information of each of members already registered in a membership database. The first processor also stores, in a visitor database, registered information of a member corresponding to the registered face information which was successfully authenticated with the face information of the visitor, in association with the face information of the visitor. The second interface acquires information including face information of a person of settlement. The second processor executes face authentication between the face information of the person of settlement included in the information acquired by the second interface and the face information of the visitor which the visitor database stores, and executes a settlement process by using the registered information of the member corresponding to the face information of the visitor which was successfully authenticated with the face information of the person of settlement.

Preferably, the second processor is configured to delete from the visitor database the face information of a visitor who completed settlement and the information corresponding to the face information of the visitor.

Preferably, the information processing system further comprises a first camera configured to photograph an image or images including a face of a visitor, and to extract face information from the photographed image or images.

Preferably, the first processor is configured to execute face authentication between the face information of the visitor, which was extracted from the image or images that the first camera photographed, and the registered face information.

Preferably, the information processing system further comprises a second camera configured to photograph an image or images including a face of a person of settlement, and to extract face information from the photographed image or images.

Preferably, the second processor is configured to execute face authentication between the face information of the person of settlement, which was extracted from the image or images that the second camera photographed, and the registered face information.

Preferably, the information processing system further comprises a first information input interface configured to acquire first identification information which identifies the visitor.

Preferably, the information processing system further comprises a second information input interface configured to acquire second identification information which identifies the person of settlement.

Preferably, the second processor is configured to confirm that the visitor and the person of settlement are an identical person, by collation between the first identification information and the second identification information.

Preferably, each of the first and second information input interfaces is an interface configured to execute wireless communication, and to receive the first identification information and the second identification information from a wireless communication device by wireless communication.

Preferably, the first information input interface is configured to acquire as the first identification information a password which the visitor inputs.

Preferably, the second information input interface is configured to acquire as the second identification information a password which the person of settlement inputs.

Preferably, each of the first and second information input interfaces is an interface configured to acquire any biological information other than face information.

Preferably, the second processor is configured to execute biometrics authentication between the biological information of the visitor, which the first information input interface acquires, and the biological information of the person of settlement, which the second information input interface acquires.

Preferably, the information processing system further comprises a commodity recognition unit configured to recognize a plurality of commodities, which are objects of purchase by the person of settlement, in the settlement process.

Preferably, the second processor is configured to make settlement for the commodities recognized by the commodity recognition unit.

The present invention further relates to a computer-readable, non-transitory storage medium having stored thereon an information processing program including an information storage program and a settlement program which are executable by a computer, the information storage program controlling the computer to execute functions of: executing face authentication between face information of a visitor, which is included in information acquired by a first interface configured to acquire information including face information of a visitor, and registered face information of each of members registered in a membership database; and storing, in a visitor database, registered information of a member corresponding to the registered face information which was successfully authenticated with the face information of the visitor, in association with the face information of the visitor, and the settlement program controlling the computer to execute functions of: executing face authentication between face information of a person of settlement, which is included in information acquired by a second interface configured to acquire information including face information of a person of settlement, and the face information of the visitor which the visitor database stores; and executing a settlement process by using the registered information of the member corresponding to the face information of the visitor which was successfully authenticated with the face information of the person of settlement.

Various embodiments, given as non-limiting examples, will be described hereinafter with reference to the accompanying drawings. (First Embodiment)

A first embodiment assumes an operation in which a scheme of registering information of a customer as membership is introduced. The first embodiment assumes that a customer registered as a member enters a store, makes a settlement of a purchased commodity, and goes out of the store. In addition, an information processing system according to the first embodiment identifies a customer (member) by face authentication, and executes a settlement of, e.g. a purchase price, by using the membership information of the identified customer.

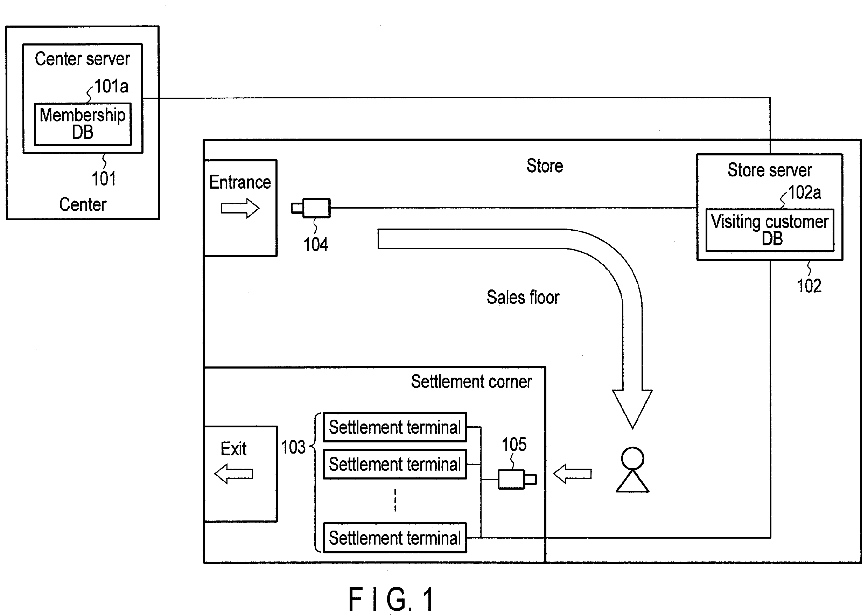

FIG. 1 is a view which schematically illustrates a configuration example of the information processing system according to the first embodiment.

The information processing system of the first embodiment includes a center server 101, a store server 102, settlement terminals 103, a first camera 104, and a second camera 105. Incidentally, the information processing system is not restricted to the configuration illustrated in FIG. 1. The information processing system can be realized by varying an apparatus configuration depending on an operational scale, an operational condition, or an environment of installation. For example, the center server 101 and store server 102 may be realized by an integrated apparatus. In addition, the store server 102 and settlement terminals 103 may be realized by an integrated apparatus. Furthermore, the first camera 104 may be provided on the store server 102. The second camera 105 may be provided on the settlement terminal 103. Besides, the center server 101 or store server 102 may be realized by a plurality of apparatuses.

The center server 101 is an apparatus which manages customer information. The center server 101 is installed, for example, in a center for managing customer information in the present information processing system. The center server 101 may be installed in the head office which generally controls a plurality of stores that operate the present information processing system, or may be provided on cloud servers.

The center server 101 includes a membership information database (membership DB) 101a. The membership DB 101a stores membership information of each member. The membership information includes registered information (registered face information) for face authentication of a member, and registered information of the member. The center server 101 connects to the store server 102 over a network. The center server 101 and store server 102 may be geographically distant each other.

The store server 102 is an apparatus which manages information within the store. The store server 102 is installed, for example, in the store. The store server 102 may be installed outside the store, if the store server 102 is connectable to each device in the store. The store server 102 includes a visiting customer information database (visiting customer DB) 102a. The visiting customer (visitor) DB 102a stores visiting customer information of each visiting customer (visitor). The visiting customer information includes face information of a visiting customer, and registered information of the visiting customer.

The store server 102 connects to the center server 101, settlement terminals 103 and first camera 104. The first camera 104 photographs the face of a visitor (visiting customer) entering the store. For example, the first camera 104 is disposed near the entrance of the store, and photographs the face of a person (visitor) coming in from the entrance. The first camera 104 may be of any type which photographs the face of a visiting customer as a face image or face images for use in face authentication. The store server 102 acquires an image or images which the first camera 104 photographed. The store server 102 extracts face information of the visiting customer from the image or images which the first camera 104 photographed. Incidentally, the first camera 104 may detect the face of the visiting customer from the photographed image or images, and may supply image data (face image data) including the detected face of the visiting customer to the store server 102.

In addition, the store server 102 also connects to the settlement terminals 103. The store server 102 and plural settlement terminals 103 connect to each other, for example, over a network in the store. The number of settlement terminals 103 may be one, or may be plural. In the configuration example illustrated in FIG. 1, a settlement corner is directly connected to the exit of the store. A user coming in the store from the entrance selects commodities on the salesfloor, and then enters the settlement corner from the salesfloor. The user who entered the settlement corner performs a purchasing settlement of commodities by using the settlement terminal 103. In the case of the store layout, the user who has finished the settlement goes out through the exit of the store.

The settlement terminal 103 is an apparatus which executes a settlement of an amount of money, such as a purchase price of commodities. The settlement terminal 103 connects to the second camera 105. The second camera 105 photographs the face of the person (person of settlement) who makes a settlement of a price. For example, the second camera 105 is disposed near the entrance of the settlement corner. The settlement terminal 103 acquires the image or images which the second camera 105 photographed. The settlement terminal 103 detects the face of the person of settlement from the image or images which the second camera 105 photographed, and extracts face information from the detected face image or images of the person of settlement.

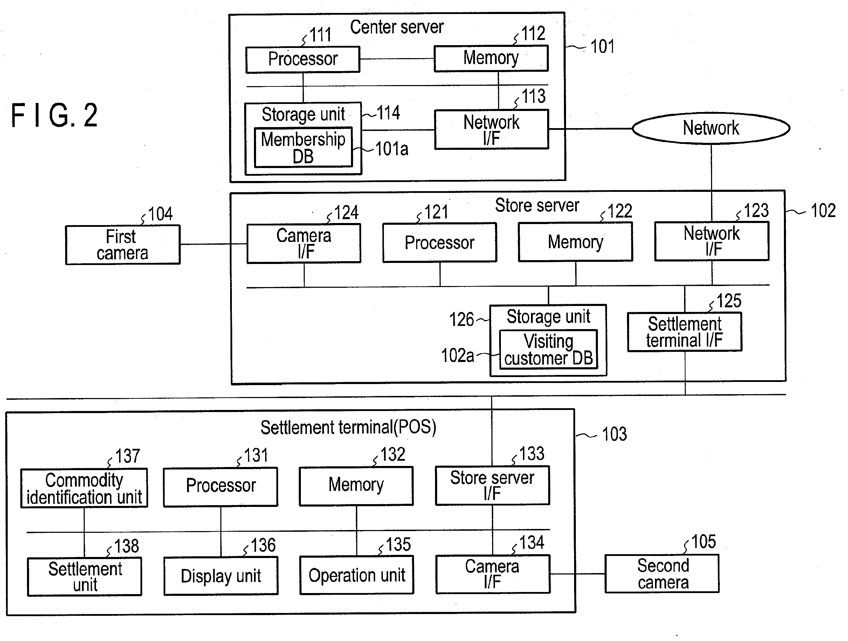

Next, FIG. 2 is a block diagram illustrating a hardware configuration example of respective devices which constitute the information processing system of the first embodiment.

The center server 101 includes a processor 111, a memory 112, a network (NW) I/F 113, and a storage unit 114. The processor 111 realizes various process functions by executing programs. The memory 112 includes a program memory such as a ROM, and a working memory such as a RAM. The processor 111 realizes various process functions by executing programs which the memory 112 stores.

The network I/F 113 is an interface for a connection to the store server 102 via a network. For example, the network I/F 113 communicates with the store server 102 via a broadband network outside the store. The storage unit 114 is a large-capacity nonvolatile memory. For example, the storage unit 114 is composed of a storage device such as a hard disk drive (HDD) or a solid-state drive (SSD). The storage unit 114 includes the membership DB 101a.

The store server 102 includes a processor 121, a memory 122, a network (NW) I/F 123, a camera I/F 124, a settlement terminal I/F 125, and a storage unit 126. The processor 121 realizes various process functions by executing programs. The memory 122 includes a program memory such as a ROM, and a working memory such as a RAM. The processor 121 realizes various process functions by executing programs which the memory 122 stores.

The network I/F 123 is an interface for a connection to the center server 101 via the network. For example, the network I/F 123 communicates with the center server 101 via a broadband network outside the store.

The camera I/F 124 is an interface for a connection to the first camera 104. The camera I/F 124 may be an interface which connects to the first camera 104 via a dedicated cable. In addition, the camera I/F 124 may be an interface which connects to the first camera 104 by wireless communication. Besides, the camera I/F 124 may be a LAN interface which connects the first camera 104 to a local area network (LAN) in the store.

The settlement terminal I/F 125 is an interface for a connection to the settlement terminal 103 in the store. The settlement terminal I/F 125 may be a LAN interface which connects to a LAN in the store.

The storage unit 126 is a large-capacity nonvolatile memory. For example, the storage unit 126 is composed of a storage device such as an HDD or an SSD. The storage unit 126 includes the visiting customer DB 102a which stores visiting customer information.

The settlement terminal 103 includes a processor 131, a memory 132, a store server I/F 133, a camera I/F 134, an operation unit 135, a display unit 136, a commodity identification unit 137, and a settlement unit 138. The processor 131 realizes various process functions by executing programs. The memory 132 includes a program memory such as a ROM, and a working memory such as a RAM. The processor 131 realizes various process functions by executing programs which the memory 132 stores. For example, the processor 131 includes a function of executing a settlement process for settling a purchase price by using the settlement unit 138.

The store server I/F 133 is an interface for a connection to the store server 102. The store server I/F 133 can be realized by, for example, a LAN interface which connects the store server 102 to LAN.

The camera I/F 134 is an interface for a connection to the second camera 105. The camera I/F 134 can be realized by, for example, an interface which connects to the second camera 105 via a dedicated cable or wireless communication. In addition, the camera I/F 134 may be a LAN interface which connects the second camera 105 to LAN.

The operation unit 135 is an operation device which inputs an operation relating to a settlement process. The display unit 136 is a display device. For example, the display unit 136 displays the name of a purchased commodity and the price of settlement. The commodity identification unit 137 identifies a commodity that is to be settled. The settlement unit 138 includes, for example, a casher, and a card processing device.

Next, process functions of the respective devices in the information processing system according to the first embodiment are schematically described.

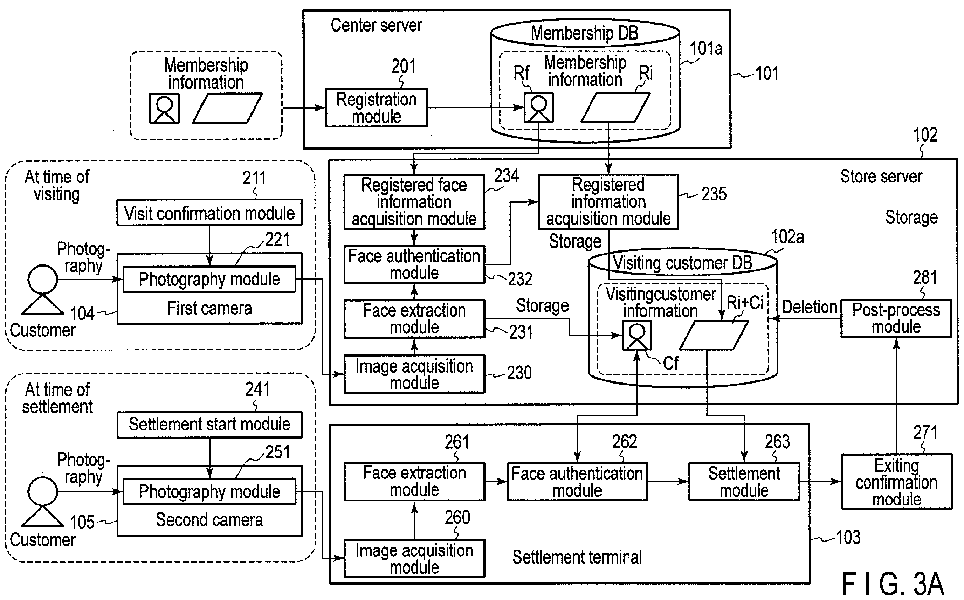

FIG. 3A is a view for describing the process functions by the information processing system of the first embodiment. The respective modules illustrated in FIG. 3A are process functions which the processors in the respective devices realize by executing the programs stored in the memories.

In addition, in the first embodiment to be described below, it is presupposed that each customer utilizing the information processing system has pre-registered for membership. The center server 101 includes a registration module 201 which registers the membership information of customers in the membership DB 101a. The registration module 201 is a process function which the processor 111 realizes by executing a program for a registration process stored in the memory 112. The registration module 201 acquires membership registration information of each member, and registers all or part of the acquired membership registration information in the membership DB 101a as membership information.

The membership information includes face information (registered face information) Rf for registration of the present member, and registered personal information (registered information) Ri of the member. The registered face information Rf is information for use in a face authentication process. The registered face information Rf may be a face image or images itself of the member, or may be features of the member's face for use in the face authentication process. In addition, the registered information Ri includes personal information such as the member's name, gender, age, address, telephone number, mail address, membership ID, and settlement information. The settlement information is, for instance, information such as credit settlement information which is usable for settling a purchase price, or membership point information which is also usable for settling a purchase price.

The center server 101 manages the membership DB 101a in which the membership information was registered. The center server 101 provides information stored in the membership DB 101a, in response to a request from the store server 102. For example, the center server 101 provides the registered face information Rf registered in the membership DB 101a, in response to an inquiry from the store server 102. In addition, the center server 101 provides the registered information Ri in response to an inquiry of the registered information Ri of the member from the store server 102. Furthermore, the center server 101 may update the membership information in the membership DB 101a or add new information to the membership information, in response to a request from the store server 102.

In the store, a visit confirmation module 211 confirms a customer's entering the store. The visit confirmation module 211 generates a trigger to give a timing to start the process, that is, a timing to photograph a face image or images. The visit confirmation module 211 may be provided at the entrance of the store, and may be composed by a gate (entrance gate) which detects an incoming person. In addition, the visit confirmation module 211 may be composed by a photography button which is pushed by a visiting customer himself/herself, by explicitly disposing the first camera 104. Besides, the visit confirmation module 211 may be configured to detect a person or a face by image recognition process from an image or images which a camera disposed near the entrance continuously photographs.

If the visit confirmation module 211 confirms a customer's entering, the first camera 104 photographs an image or images including the face of the customer (visiting customer) by a photography module 221. The first camera 104 supplies image data (photography data), which captures the face of the visiting customer, to the store server 102. The first camera 104 may supply only image data of the photographed image or images, which includes the face, to the store server 102. In addition, the first camera 104 may supply face image data, which is cut out from the photographed image or images, to the store server 102. Incidentally, face information is information extracted from the photography image or images. Thus, the information, which the first camera 104 supplies to the store server 102, is information including face information about the visiting customer.

The store server 102 acquires, by an image acquisition module 230, the photography image or images (the information including the face information) photographed by the first camera 104 via the camera I/F 124. The image acquisition module 230 is realized by the camera I/F 124 which is controlled by the processor 121. In addition, a face extraction module 231 extracts face information Cf of the visiting customer from the photography image or images of the first camera 104 acquired by the image acquisition module 230. The face extraction module 231 is realized by the processor 121 executing a program. The face extraction module 231 supplies the face information Cf of the visiting customer, which was extracted from the photography image or images acquired by the first camera 104, to a face authentication module 232, and stores the face information Cf in the visiting customer DB 102a.

For example, the face extraction module 231 may extract an image or images of a face region from the acquired photography image(s), and may extract, from the extracted image or images of the face region, features of the face for use in face authentication. In this case, the face extraction module 231 supplies the features of the face as the face information Cf of the visiting customer to the face authentication module 232, and stores the features of the face in the visiting customer DB 102a. Furthermore, the face extraction module 231 may supply face image data, which was cut out in a predetermined size of the face region from the image or images acquired by the image acquisition module, as the face information Cf of the visiting customer to the face authentication module 232, and may also store the face image data in the visiting customer DB 102a.

A registered face information acquisition module 234 acquires from the center server 101 the registered face information Rf which is stored in the membership DB 101a. The registered face information acquisition module 234 is a process function which the processor 121 realizes by communicating with the center server 101 via the network I/F 123. The registered face information acquisition module 234 acquires the registered face information Rf from the center server 101, and supplies the registered face information Rf to the face authentication module 232. For example, the registered face information acquisition module 234 inquires of the center server 101 the registered face information Rf, and acquires the registered face information Rf from the center server 101 for the face authentication.

The face authentication module 232 executes a face authentication process by face collation between the visiting customer's face information Cf supplied from the face extraction module 231 and the member's face information (registered face information) Rf which is acquired by the registered face information acquisition module 234. The face authentication module 232 is a process function which the processor 121 realizes by executing a program for face authentication stored in the memory 122. The face authentication process of the face authentication module 232 is not restricted to a specific algorithm.

In addition, the result of the face authentication should be obtained before the start of settlement by the customer (before the customer goes to the settlement corner). In the first embodiment, sufficient process time can be ensured for the face authentication between the visiting customer's face information Cf and the member's face information Rf. Accordingly, even if the amount of registered face information Rf of the membership DB 101a is large, the face authentication module 232 can execute the face authentication process by a high-precision algorithm which requires a long processing time.

For example, the face authentication process may be a process of collating features of the face which are indexes of relative positions between characteristic parts (e.g. eyes, noses, mouths) of a plurality of faces. When executing face authentication by using the features of the face, the membership DB 101a and visiting customer DB 102a may store features of the face as the face information Rf of the member and the face information Cf of the visiting customer. The features of the face are not information about which a human can identify an individual at a glance. Thus, by registering the features of the face as face information in the DB, the security of personal information protection, etc. can be enhanced.

Incidentally, the center server 101 may execute the face authentication process between the face information Cf of the visiting customer and the registered face information Rf. In this case, the face authentication module 232 and registered face information acquisition module 234 may request the center server 101 to execute the face authentication between the face information Cf of the visiting customer and the registered face information Rf, and may acquire a result of the face authentication. The center server 101 may execute the face authentication process in response to the request from the store server 102, and may return a process result of the face authentication to the store server 102.

A registered information acquisition module 235 acquires registered information Ri of a specific member from the center server 101. The registered information acquisition module 235 is a process function which the processor 121 realizes by communicating with the center server 101 via the network I/F 123. The registered information acquisition module 235 acquires the registered information Ri of the member corresponding to the registered face information Rf which has been coincident with (has been identified as) the face image or images of the visiting customer by the face authentication process of the face authentication module 232. The registered information acquisition module 235 stores the acquired registered information Ri of the member (the member identified as the visiting customer) and the face information Cf of the visiting customer as visiting customer information of one person in the visiting customer DB 102a. Thereby, as the visiting customer information of each visiting customer, the face information Cf of the visiting customer and the registered information Ri of the member identified as the visiting customer are stored in the visiting customer DB 102a.

In addition, at the settlement corner in the store, a settlement start module 241 detects a person of settlement. The settlement start module 241 generates a trigger to give a timing to start the settlement process, that is, a timing to photograph the face of the person of settlement. The settlement start module 241 may be configured to detect a person who is to perform a settlement, by a gate provided at the entrance of the settlement corner or in front of the settlement terminal 103. In addition, the settlement start module 241 may be composed by a photography button which is pushed by the customer himself/herself who wishes to perform a settlement by explicitly disposing the second camera 105. Besides, the settlement start module 241 may be configured to detect the person of settlement from an image or images which a camera disposed near the entrance of the settlement corner or near the settlement terminal 103 photographs.

The second camera 105 photographs, by a photography module 251, the face of the user (person of settlement) who performs a settlement of purchasing commodities, etc. For example, if the settlement start module 241 detects a person of settlement, the second camera 105 photographs an image or images including the face of the person of settlement. The second camera 105 supplies image data (photography image or images), which captures the face of the person of settlement, to the settlement terminal 103. The second camera 105 may supply only an image or images including the face, in the photographed image, to the settlement terminal 103. In addition, the second camera 105 may supply image data, which is obtained by cutting out an image of a face region in a predetermined size from the photographed image(s), to the settlement terminal 103. Incidentally, face information is information extracted from the photography image or images. Thus, the information, which the second camera 105 supplies to the settlement terminal 103, is information including face information. The settlement terminal 103 acquires, from an image acquisition module 260, the photography image or images (the information including face information) which is photographed by the second camera 105. The image acquisition module 260 is realized by the camera I/F 134 which the processor 131 controls. A face extraction module 261 extracts face information from the image acquired by the image acquisition module 260, and supplies the extracted face information to a face authentication module 262. The face extraction module 261 is a function which the processor 131 realizes by executing a program. In addition, the face extraction module 261 may supply features of the face (face features for use in face authentication), which is calculated from the face image or images included in the acquired image or images, as the face information of the person of settlement to the face authentication module 262.

The face authentication module 262 executes a face authentication process by face collation between the face information of the person of settlement, which is supplied from the face extraction module 261, and the visiting customer's face information Cf which the visiting customer DB 102a stores. The face authentication module 262 is a process function which the processor 131 realizes by executing a program for face authentication stored in the memory 132. The face authentication process of the face authentication module 262 is not restricted to a specific algorithm. However, the face authentication module 232 of the store server 102 and the face authentication module 262 of the settlement terminal 103 execute, in principle, the face authentication by the same algorithm.

The number of face information pieces of visiting customers, which the visiting customer DB 102a stores, is less than the number of face information pieces of members, which the membership DB 101a stores. Accordingly, the face authentication process of the face authentication module 262 can narrow down the face information for collation with the face information of the person of settlement to the face information Cf of the visiting customer, and thus the face authentication module 262 can execute quick face authentication. In addition, the face authentication module 262 collates the face information extracted from the image or images (the face image or images at a time of settlement), which the second camera 105 photographed, with the face information Cf extracted from the image or images (face image or images at a time of entering the store), which the first camera 104 photographed. Thus, the face authentication module 262 can execute high-precision face authentication by face images with less influence of change with time.

Incidentally, the store server 102 may execute the face authentication process between the face information of the person of settlement extracted from the image or images, which the second camera 105 photographed, with the face information Cf of the visiting customer. In this case, the face authentication module 262 may request the store server 102 to execute the face authentication between the face information of the person of settlement and the face information Cf of the visiting customer, and may acquire a result of the face authentication. The store server 102 may execute the face authentication process in response to the request from the settlement terminal 103, and may return a process result of the face authentication to the settlement terminal 103.

A settlement module 263 executes a settlement process for the purchaser which the second camera 105 photographed. The settlement module 263 acquires the result of the face authentication from the face authentication module 262. When the face authentication by the face authentication module 262 successfully authenticated that the person of settlement is a specific visiting customer, the settlement module 263 acquires the registered information Ri of the visiting customer information of the visiting customer. The settlement module 263 executes a settlement process as a normal process by using the acquired registered information Ri.

For example, a settlement by credit settlement information included in the registered information Ri is applicable to the settlement process using the registered information Ri. In this case, the center server 101 registers the credit settlement information in the membership DB 101a as a part of the registered information Ri. The settlement module 263 refers to a credit company for the credit settlement information included in the registered information Ri, and executes an accounting process of the purchase price. In addition, the settlement process using the registered information Ri may be a payment procedure of the purchase price by membership points which were saved in advance. According to these settlement processes, the user can automatically settle the purchase price by using the registered information Ri of the member, which is acquired by the face authentication.

In addition, when the face information of the person of settlement failed to agree with the face information Cf of any visiting customer, the settlement module 263 executes a settlement process by a predetermined exceptional process. Further, the settlement process by the exceptional process may be a process of guiding the customer to a settlement terminal at which a salesclerk is present, and completing the purchase of goods by the purchase settlement procedure via the salesclerk. In addition, the settlement process by the exceptional process may be a process of executing a purchase settlement by a self-checkout system which utilizes a credit card that the customer possesses. According to these exceptional processes, even if face authentication fails, the settlement process of the purchase price of goods, etc. can be completed.

Besides, after completing the settlement process, the settlement module 263 may notify the store server 102 of the content of settlement, etc. The store server 102, which received the notification of the content of settlement, may notify the center server 101 of the content of settlement. The center server 101, which received the notification of the content of settlement, may update the membership information of the membership DB 101a, based on the content of settlement, or may store the content of settlement in association with the membership information.

An exiting confirmation module 271 confirms exiting of a customer. The exiting confirmation module 271 may be composed of a gate (exit gate) which is provided at the exit of the store and detects exiting of the customer. In addition, the exiting confirmation module 271 may execute collation with a purchase settlement information history of a receipt, etc., in order to uniquely identify the outgoing customer. Further, the exiting confirmation module 271 may recognize exiting of the customer, from an image or images which a camera provided near the exit of the store photographs. Moreover, the exiting confirmation module 271 may be omitted in the case of the operation which presupposes the exiting of the customer after the settlement process, for example, because of the layout of the route to the exit.

Upon receiving the notification of the confirmation of exiting, a post-process module 281 of the store server 102 deletes the visiting customer information of the present customer from the visiting customer DB 102a. In addition, in the case of the operation which presupposes the exiting of the customer after the settlement process, the post-process module 281 of the store server 102 may delete the visiting customer information of the present customer, upon receiving the notification of the completion of settlement from the settlement module 263. Besides, the post-process module 281 may extract visiting customer information after the passage of a predetermined time or more, and may delete the visiting customer information.

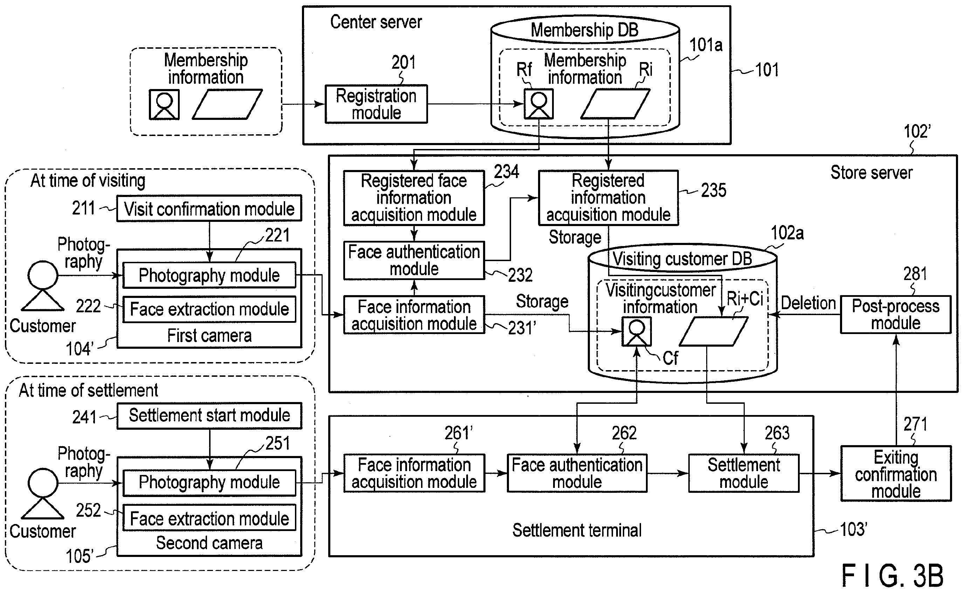

FIG. 3B is a view illustrating a modification of the configuration of the process functions by the information processing system of the first embodiment illustrated in FIG. 3A. Incidentally, in FIG. 3B, the same structural parts as in FIG. 3A are denoted by the same reference numerals, and a detailed description is omitted.

A first camera 104' illustrated in FIG. 3B includes a face extraction module 222 in addition to the configuration of the first camera 104 illustrated in FIG. 3A. A second camera 105' illustrated in FIG. 3B includes a face extraction module 252 in addition to the configuration of the second camera 105 illustrated in FIG. 3A. In addition, a store server 102' illustrated in FIG. 3B includes a face information acquisition module 231' in place of the image acquisition module 230 and face extraction module 231 of the store server 102 illustrated in FIG. 3A. Furthermore, a settlement terminal 103' illustrated in FIG. 3B includes a face information acquisition module 261' in place of the image acquisition module 260 and face extraction module 261 of the settlement terminal 103 illustrated in FIG. 3A.

The face extraction module 222 of the first camera 104' extracts face information from the image or images which the photography module 221 photographed. The face extraction module 222 supplies the face information, which was extracted from the photographed image or images, to the face information acquisition module 231' of the store server 102'. Specifically, the information processing system illustrated in FIG. 3B supplies not the image or images itself photographed by the first camera 104', but the face information (the information including at least the face information) extracted from the photographed image or images, to the store server 102'. The face information acquisition module 231' of the store server 102' acquires from the first camera 104' the face information (the information including at least the face information) extracted from the photographed image or images. The face information acquisition module 231' supplies the acquired face information to the face authentication module 232, and stores the acquired face information in the visiting customer DB 102a.

In the meantime, the first camera 104' may supply, together with the photographed image or images, the face information extracted from the photographed image or images, to the store server 102'. In this case, the face information acquisition module 231' of the store server 102' may store the photography image or images in the visiting customer DB.

The face extraction module 252 of the second camera 105' extracts face information from the image or images which the photography module 251 photographed. The face extraction module 252 supplies the face information, which was extracted from the photographed image or images, to the face information acquisition module 261' of the settlement terminal 103'. Specifically, the information processing system illustrated in FIG. 3B supplies not the image or images itself photographed by the second camera 105', but the face information (the information including at least the face information) extracted from the photographed image or images, to the settlement terminal 103'. The face information acquisition module 261' of the settlement terminal 103' acquires from the second camera 105' the face information (the information including at least the face information) extracted from the photographed image or images. The face information acquisition module 261' supplies the acquired face information to the face authentication module 262.

Incidentally, the information processing system of the first embodiment may be realized by combining the configuration illustrated in FIG. 3A and the configuration illustrated in FIG. 3B. For example, in the information processing system, the first camera and store server may have the configuration of FIG. 3A, and the second camera and settlement terminal may have the configuration of FIG. 3B. In addition, in the information processing system, the first camera and store server may have the configuration of FIG. 3B, and the second camera and settlement terminal may have the configuration of FIG. 3A.

Additionally, any of the devices in the information processing system may realize the respective parts of FIG. 3A and FIG. 3B. For example, some or all of the respective parts of the store server 102 may be provided in the settlement terminal 103. Besides, some or all of the respective parts of the settlement terminal 103 may be provided in the store server 102. For example, in a small-scale store, an apparatus, in which the store server 102 and settlement terminal 103 are integrally constructed, may realize the information processing system. Furthermore, some or all of the respective parts of the center server 101 may be provided in the store server 102.

The description below mainly assumes the configuration example illustrated in FIG. 3A.

Next, a description is given of an information storage process which stores visiting customer information in the visiting customer DB 102a in the information processing system of the first embodiment.

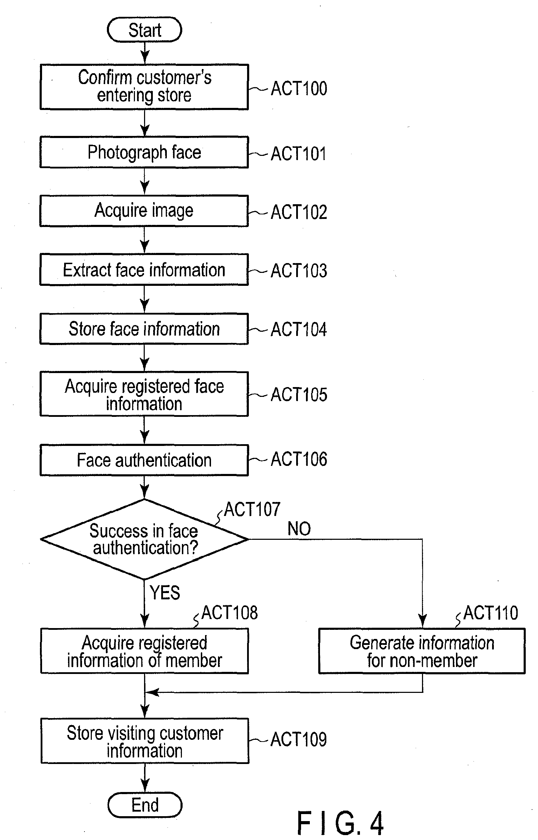

FIG. 4 is a flowchart for describing the flow of the information storage process in the information processing system of the first embodiment.

If a customer enters the store, the visit confirmation module 211 detects the entering of the customer (ACT 100). Upon detecting the entering of the customer, the visit confirmation module 211 notifies the first camera 104 of the entering of the customer (or the start of photography of the face image(s)). Upon receiving the notification of the customer's entrance from the visit confirmation module 211, the first camera 104 photographs the customer (visiting customer) who entered the store (ACT 101). The first camera 104 supplies to the store server 102 the photography image or images (the information including the face information) capturing the image or images including the visiting customer's face.

The processor 121 of the store server 102 acquires the photography image or images (the information including the face information) from the first camera 104 via the camera I/F 124 (ACT 102). The processor 121 extracts the face information Cf of the visiting customer from the acquired photography image or images (ACT 103). If the processor 121 successfully extracted the face information Cf of the visiting customer from the photography image or images of the first camera 104, the processor 121 stores the extracted face information Cf of the visiting customer in the visiting customer DB 102a (ACT 104). The face information Cf of the visiting customer may be the features of the face which is extracted from the face image or images and is used for face collation, or may be the face image data obtained by extracting the image or images of the face area from the photography image or images.

In the meantime, in the case of the configuration illustrated in FIG. 3B, the store server 102' acquires from the first camera 104' the face information extracted from the photography image or images. In addition, upon acquiring the face information Cf of the visiting customer, the processor 121 executes a face authentication process of searching the registered face information Rf of the membership DB 101a, which agrees with the face information Cf of the visiting customer. For example, the processor 121 acquires a plurality of pieces of registered face information Rf, which are objects of face authentication (collation), from the membership DB 101a of the center server 101 (ACT 105). The processor 121 executes face authentication (face collation of 1:N) between the face information Cf of the visiting customer and each piece of registered face information Rf acquired from the center server 101 (ACT 106).

For example, the processor 121 determines whether the face authentication was successful or not, according to whether the registered face information Rf, which can be identified as the face information Cf of the visiting customer (i.e. determined as the identical person), is present or not (ACT 107). For example, if the processor 121 determines that the face information Cf of the visiting customer and specific registered face information Rf are identical (i.e. are determined to be the identical person), the processor 121 determines that the face authentication was successful. In addition, if the processor 121 determines that the face information Cf of the visiting customer was not identified as any registered face information Rf, the processor 121 determines that the face authentication failed.

If the face authentication was successful (ACT 107, YES), the processor 121 acquires registered information Ri corresponding to the registered face information Rf identified as the face information Cf of the visiting customer (ACT 108). Upon acquiring the registered information Ri, the processor 121 associates the acquired registered information Ri with the face information Cf of the visiting customer, and stores the associated information as visiting customer information in the visiting customer DB 102a (ACT 109). Incidentally, the processor 121 may acquire the registered information Ri together with the registered face information Rf.

In addition, if the face authentication failed (ACT 107, NO), the processor 121 deems that the visiting customer is not registered as a member, and executes an exceptional process (non-membership process). For example, if the face authentication failed, the processor 121 generates information for a non-member for the visiting customer (ACT 110). The processor 121 associates the face information Cf of the visiting customer with non-membership information, and stores the associated information as non-membership visiting customer information in the visiting customer DB 102a (ACT 109).

In the meantime, the center server 101 may execute the face authentication process between the face information Cf of the visiting customer and the registered face information Rf. In this case, the processor 121 of the store server 102 executes, as a process taking the place of ACT 105 to ACT 108, a process of requesting the center server 101 to execute face authentication, and acquiring a result of the face authentication. For example, the processor 121 sends to the center server 101 a request for the face authentication between the face information Cf of the visiting customer and the registered face information Rf. After requesting the face authentication, the processor 121 acquires from the center server 101 the registered information Ri corresponding to the registered face information Rf identified as the face information Cf of the visiting customer, or the notification of the failure of the face authentication.

According to the above-described information storage process, the store server can store the face information of the visiting customer, who actually visited the store, and the registered information of the visiting customer as the member in the visiting customer DB as the visiting customer information. In addition, the face authentication process between the face information of the visiting customer and the registered face information of the registered member is executable during the period until the customer performs a settlement. Thus, even in an operation mode in which the number of members is very large, the information processing system can execute the face authentication process which needs much time, by effectively utilizing the time in which the customer is present on the salesfloor for shopping, etc. As a result, the information processing system can avoid degradation in services, such as waiting to enter the store due to a wait for the completion of a face authentication process at the time of entering.

Next, a description is given of a settlement process in the information processing system of the first embodiment.

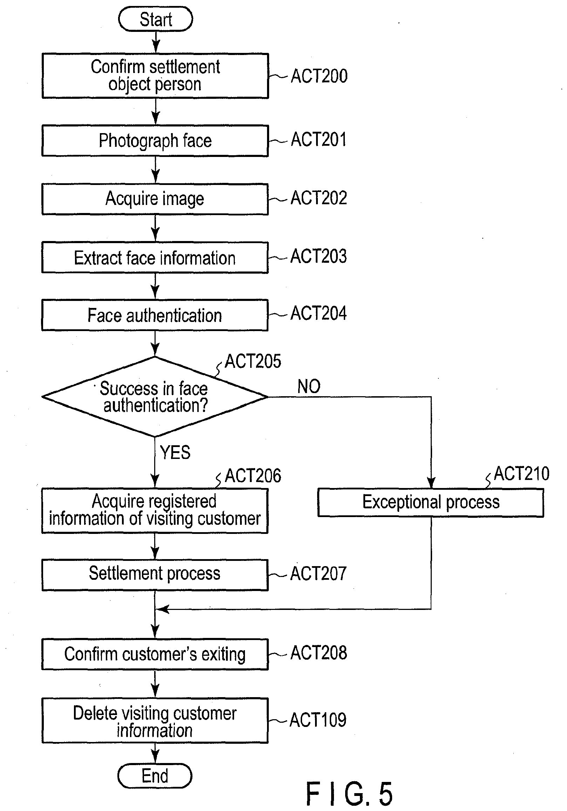

FIG. 5 is a flowchart for describing the flow of the settlement process in the information processing system of the first embodiment.

The settlement start module 241 detects a start of settlement by detecting a person of settlement (ACT 200). The settlement start module 241 may detect the start of settlement, for example, when the customer passed through the entrance of the settlement corner, or when the customer pressed a predetermined button (a photography button or a settlement start button). In addition, the settlement start module 241 may determine the settlement start when the person of settlement was detected from the image or images photographed by the camera. Upon determining the settlement start, the settlement start module 241 notifies the second camera 105 of the settlement start.

Upon receiving the notification of the settlement start, the second camera 105 photographs a face image or images of the person of settlement (purchaser) (ACT 201). The second camera 105 supplies the photography image or images (the information including face information), which the second camera 105 photographed, to the settlement terminal 103.

The processor 131 of the settlement terminal 103 acquires the photography image or images (the information including the face information) from the second camera 105 via the camera I/F 134 (ACT 202). Upon acquiring the photography image or images, the processor 131 extracts the face information of the person of settlement from the acquired photography image or images (ACT 203).

In the meantime, in the case of the configuration illustrated in FIG. 3B, the settlement terminal 103' acquires from the second camera 105' the face information extracted from the photography image or images. If the processor 131 successfully extracted the face information of the person of settlement, the processor 131 executes, by the function of the face authentication module 262, face authentication between the face information of the person of settlement and the face information Cf of the visiting customer (ACT 204). The processor 131 determines whether the face authentication was successful or not, according to whether the face information Cf of the visiting customer, which can be identified as the face information of the person of settlement (i.e. determined as the identical person), is present or not (ACT 205). For example, if the face information Cf of the visiting customer, which is identified as the face information of the person of settlement, is present, the processor 131 determines that the face authentication was successful. In addition, if the processor 121 determines that the face information of the person of settlement was not identified as the face information Cf of any visiting customer, the processor 121 determines that the face authentication failed.

If the face authentication was successful (ACT 205, YES), the processor 131 acquires, by the function of the settlement module 263, registered information Ri corresponding to the face information Cf of the visiting customer, which was identified as the face information of the person of settlement (ACT 206). Upon acquiring the registered information Ri, the processor 131 executes the settlement process by using the acquired registered information Ri (ACT 207). For example, it is assumed that the registered information Ri includes credit settlement information or membership point information as settlement information which is usable for a settlement. In this case, the processor 131 may settle the amount of money, such as the purchase price of goods, by the settlement information included in the acquired registered information Ri.

In this case, the settlement process using the registered information Ri executes the settlement of the price, for example, by using the credit settlement information included in the registered information Ri. In addition, the settlement process using the registered information Ri may be a process by a payment procedure by membership points which were saved in advance. In any of the cases of the settlement process, the processor 131 executes the settlement by using the registered information Ri, and can automatically complete the settlement procedure involved in the purchase of goods, without causing troublesomeness for the customer.

Incidentally, in the settlement process, the processor 131 may print out a receipt showing the content of settlement. In addition, upon completing the settlement process, the processor 131 may store the information showing the content of settlement in the storage unit or may notify the center server 101 of the information of the content of settlement, etc.

The exiting confirmation module 271 confirms that a customer exited the store (ACT 208). For example, the exiting confirmation module 271 confirms that a customer, who completed a settlement process, went out of the store from the exit. Upon confirming the exiting of the customer, the exiting confirmation module 271 notifies the store server 102 of information indicating the customer who exited the store (for instance, the information may be a part of the identification information of the visiting customer information such as a membership ID).

Upon receiving the confirmation information of exiting from the exiting confirmation module 271, the processor 121 of the store server 102 deletes, by the function of the post-process module 281, the visiting customer information of the customer, who exited the store, from the visiting customer DB 102a (ACT 209).

In the meantime, in the case of the operation presupposing that a customer who finished a settlement process exits the store without fail, the exiting confirmation process of ACT 208 may be omitted. In addition, in order to delete the visiting customer information of a customer whose exiting could not be confirmed by the exiting confirmation module 271, the processor 121 may delete the visiting customer information after the passage of a predetermined period. For example, after the closing of the store, the processor 121 may delete the visiting customer information of the visiting customer DB 102a.

In addition, if the face authentication failed (ACT 205, NO), the processor 131 executes a settlement process by a predetermined exceptional process for the person of settlement (ACT 210). The failure of face authentication means that the processor 131 could not authenticate that the person of settlement is the visiting customer of the visiting customer information. When the processor 131 failed in face authentication (i.e. when the processor 131 could not authenticate that the person of settlement is the visiting customer of the visiting customer information), the processor 131 cannot confirm the identification information including the settlement information for use in the settlement process. The processor 131 determines that the processor 131 cannot execute the settlement process, which uses the identification information registered as membership information, for the person of settlement who failed in face authentication, and the processor 131 executes the settlement process by the exceptional process.

The settlement process by the exceptional process may be, for instance, a settlement procedure through a salesclerk, or a settlement by a credit card which the customer presents by a self-checkout system or a cash settlement. In addition, the processor 131 may guide the customer to a settlement terminal 103 which is capable of the settlement process by the exceptional process, in order to execute the settlement process by the exceptional process. The present information processing system enables a settlement of a purchase price of goods, etc. by the settlement process by the exceptional process, even for the customer who failed in face authentication. Besides, the processor 131 may execute the settlement process by the exceptional process, also when the processor 131 authenticated that the face information of the person of settlement is the face information of the visiting customer information of a non-member.

In the meantime, the store server 102 may execute the above-described face authentication process between the face information of the person of settlement and the face information of the visiting customer information. In this case, the processor 131 of the settlement terminal 103 executes, as a process taking the place of ACT 206 to ACT 208, a process of requesting the store server 102 to execute face authentication, and acquiring a result of the face authentication. For example, the processor 131 sends, together with the face information of the person of settlement, a request for the face authentication with the face information of the visiting customer, to the store server 102. In this case, the processor 131 acquires, as a result of the face authentication, the identification information of the visiting customer identified as the face information of the person of settlement, or a notification of the failure in face authentication, from the store server 102.

As described above, in the information processing system, the registered information, which is the object of the face authentication process in the settlement process, is the face information of the visiting customer information stored in the visiting customer DB 102a in the information storage process. Since the visiting customer DB 102a stores only the information of customers (visiting customers) who actually visited the store, the visiting customer DB 102a is a database of a smaller scale than the membership information of the membership DB. Accordingly, the information processing system of the first embodiment can quickly execute the face authentication process in the settlement process. As a result, the information processing system of the first embodiment can provide, with no delay, the settlement process which is executable by an individual by the quick face authentication process and which uses the pre-registered settlement information.

The information processing system of the first embodiment executes, in the settlement process, the face authentication by using the face image or images photographed at the time of the customer's entering the store and the face image or images photographed immediately before the settlement. It is expectable that the hairstyle and clothes of the customer hardly change between the time of entering and the time of settlement.

In addition, in the first embodiment, it is estimated that the time difference between the photography at the time of entering the store and the photography immediately before the settlement process is several hours in actual operation. Thus, it is thought that little time-based change occurs in the face itself of the customer between the time of entering and the time of settlement. Accordingly, the face authentication in the settlement process executes collation with the face image or images at the time of entering the store, which is small in time difference of photography. Thereby, it is expectable that the face authentication process in the settlement process of the first embodiment has a higher authentication precision than the face authentication process for the face information of the membership information. Furthermore, the information processing system of the first embodiment may confirm the result of the face authentication by determining the identity of incidental information such as a hairstyle or clothes.

### (Second Embodiment)

Next, a second embodiment is described.

An information processing system according to the second embodiment acquires identification information other than face information which a customer inputs (or presets). The information processing system of the second embodiment includes a function of authenticating a person by identification information other than face information, in addition to the face authentication by face information as described in the first embodiment. In the authentication of a person with use of the face information, it is possible that the precision of authentication varies depending on the time of photography of the face or the condition of photography. When authentication failed due to the deficiency of precision of face authentication, the information processing system of the second embodiment can make compensation by authentication by identification information. In addition, the information processing system of the second embodiment can execute strict authentication by executing authentication by identification information, in addition to authentication by face authentication.

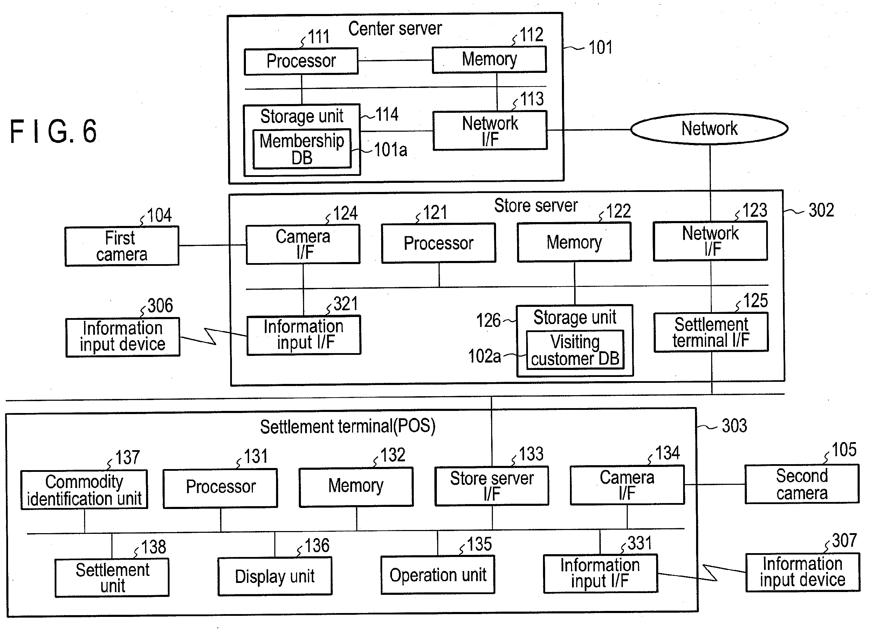

FIG. 6 is a block diagram illustrating a hardware configuration example of the information processing system according to the second embodiment.

The information processing system of the second embodiment illustrated in FIG. 6 includes a center server 101, a store server 102, settlement terminals 103, a first camera 104, a second camera 105, a first information input device 306, and a second information input device 307.

Incidentally, since the center server 101, first camera 104 and second camera 105 illustrated in FIG. 6 are realizable by components having the same functions as described in the first embodiment, the center server 101, first camera 104 and second camera 105 are designated by the same reference numerals and a detailed description is omitted. In addition, as regards the structural components in the store server 302 and settlement terminal 303 illustrated in FIG. 6, those components, which are realizable by the same components as illustrated in FIG. 2, are designated by the same reference numerals and a detailed description is omitted.

However, the information, which the memory 122, storage unit 126 and memory 132 illustrated in FIG. 6 store, is different from the information in the first embodiment illustrated in FIG. 2. In addition, the functions, which the processor 121 and processor 131 realize by executing the programs stored in the memory 122 and memory 132, are different from the functions in the first embodiment illustrated in FIG. 2.

The store server 302 illustrated in FIG. 6 includes a configuration in which an information input I/F 321 is added to the configuration of the store server 102 illustrated in FIG. 2. The information input I/F 321 is an interface for acquiring information for identifying a customer, other than face information. For example, the information input I/F 321 acquires information which a customer (visiting customer), whose face is photographed by the first camera 104, inputs to the first information input device 306. The first information input device 306 may be any component which can input information, other than face information, which can identify the customer. For example, the first information input device 306 may be a mobile terminal which a customer possesses, or a keyboard of, e.g. numeral keys, which is disposed near the entrance.

The settlement terminal 303 illustrated in FIG. 6 includes a configuration in which an information input I/F 331 is added to the configuration of the settlement terminal 303 illustrated in FIG. 2. The information input I/F 331 is an interface for acquiring information for identifying a customer, other than face information. For example, the information input I/F 331 acquires information which a customer (person of settlement), whose face is photographed by the second camera 105, inputs to the second information input device 307. The second information input device 307 may be any component which can input information, other than face information, which can identify the customer. For example, the second information input device 307 may be a mobile terminal which a customer possesses, or a keyboard of, e.g. numeral keys, which is disposed near the settlement terminal 303.

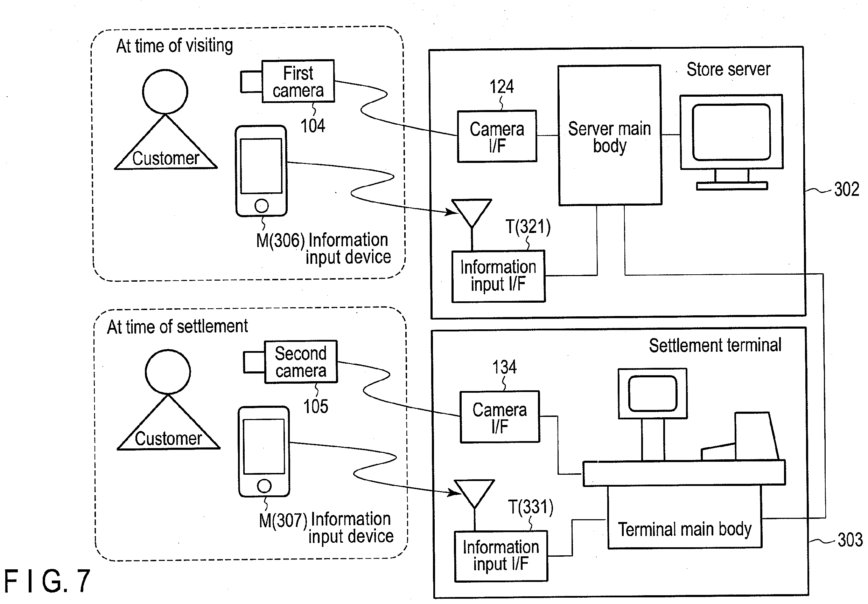

FIG. 7 is a view illustrating a first concrete example of the information processing system of the second embodiment.

In the example illustrated in FIG. 7, each of the first information input device 306 and second information input device 307 is a mobile terminal M which a customer possesses. It is assumed that the mobile terminal M (306, 307) includes a wireless communication function. The wireless communication method of the mobile terminal M is, for instance, BLE (Bluetooth Low Energy) or WiFi. Each of the information input I/F 321 and information input I/F 331 is composed of a wireless communication terminal T corresponding to the wireless communication method of the mobile terminal M which the customer possesses.

For example, the mobile terminal M can notify a preset proper ID to the store server 102 by wireless communication with the wireless communication terminal T disposed in the store. The proper ID may be any information which can identify the customer in the information processing system of the store. The store server 102 acquires the proper ID from the mobile terminal M of the visiting customer by the wireless communication terminal T functioning as the information input I/F 321. In addition, the settlement terminal 303 acquires the proper ID from the mobile terminal M of the person of settlement by the wireless communication terminal T functioning as the information input I/F 331.

Besides, the wireless communication terminal T functioning as the information input I/F 321 is also usable as a sensor which detects, by adjustment of sensitivity, that the mobile terminal M exists in a specific range. For example, by setting the photography position of the first camera 104 within the communication range, the wireless communication terminal T may detect whether the customer possessing the mobile terminal M exists at the photography position. Similarly, the wireless communication terminal T functioning as the information input I/F 331 may detect that the customer possessing the mobile terminal M exists at the photography position of the second camera 105.

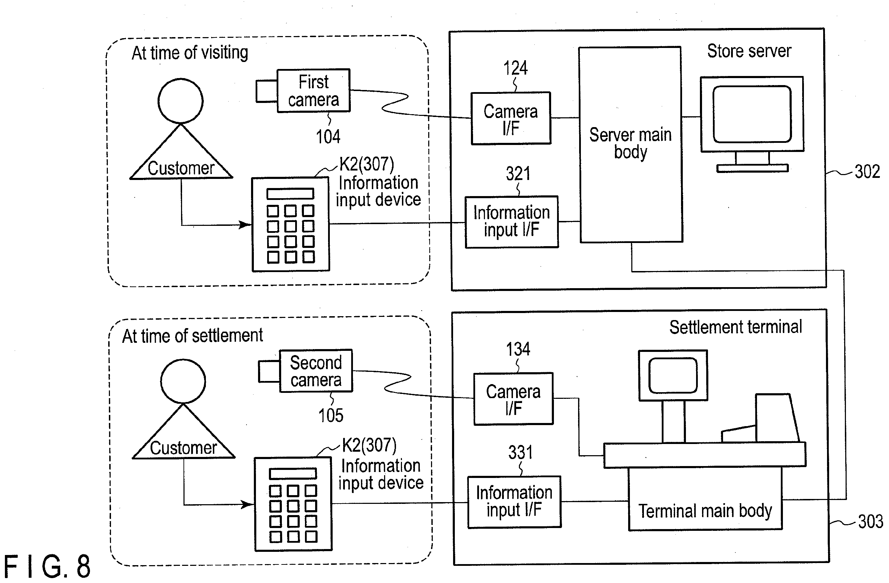

FIG. 8 is a view illustrating a second concrete example of the information processing system of the second embodiment.

In the example illustrated in FIG. 8, each of the first information input device 306 and second information input device 307 is a key input terminal K (K1, K2) to which a customer inputs information. The information input I/F 321 acquires information which was input to the key input terminal K1 functioning as the first information input device 306. The information input I/F 331 acquires information which was input to the key input terminal K2 functioning as the second information input device 307.

For example, when the first camera 104 photographs the face of a customer (visiting customer) entering the store, the customer inputs an arbitrary password as identification information to the key input terminal K1. In addition, at a time of settlement, the key input terminal K2 causes the customer (person of settlement) to re-input the password which the customer input to the key input terminal K1.

The key input terminal K1 functioning as the first information input device 306 is disposed near the photography position of the first camera 104. For example, the key input terminal K1 is disposed at such a position that the customer (visiting customer), whose face is photographed by the first camera 104, can easily perform a key input. In addition, the key input terminal K2 functioning as the second information input device 307 is disposed near the photography position of the second camera 105. For example, the key input terminal K2 is disposed at such a position that the person of settlement can easily perform a key input at the settlement terminal 303.

In the meantime, from the standpoint of convenience for the customer, it is reasonable that the key input terminal K1 requests a key input at substantially the same timing as the timing when the first camera 104 photographs the face of the customer. However, in the settlement process, it is not always necessary that the key input terminal K2 request a key input at the timing when the second camera 105 photographs the face of the person of settlement. For example, the second camera 105 may be disposed near the entrance of the settlement corner, and the key input terminal K2 may be disposed integral with the settlement terminal 303.

Besides, as each of the first information input device 306 and second information input device 307, a biological information input device, which inputs biological information of the customer, other than face information, as identification information, may be provided in place of the key input terminal K1, K2. The biological information other than face information, which is usable for personal authentication, includes, for instance, a fingerprint, a vein, an iris, voice, and a heartbeat. Devices, which input any of such biological information, may be provided as the first information input device 306 and second information input device 307.

Next, the process functions of the respective devices in the information processing system of the second embodiment are schematically described.

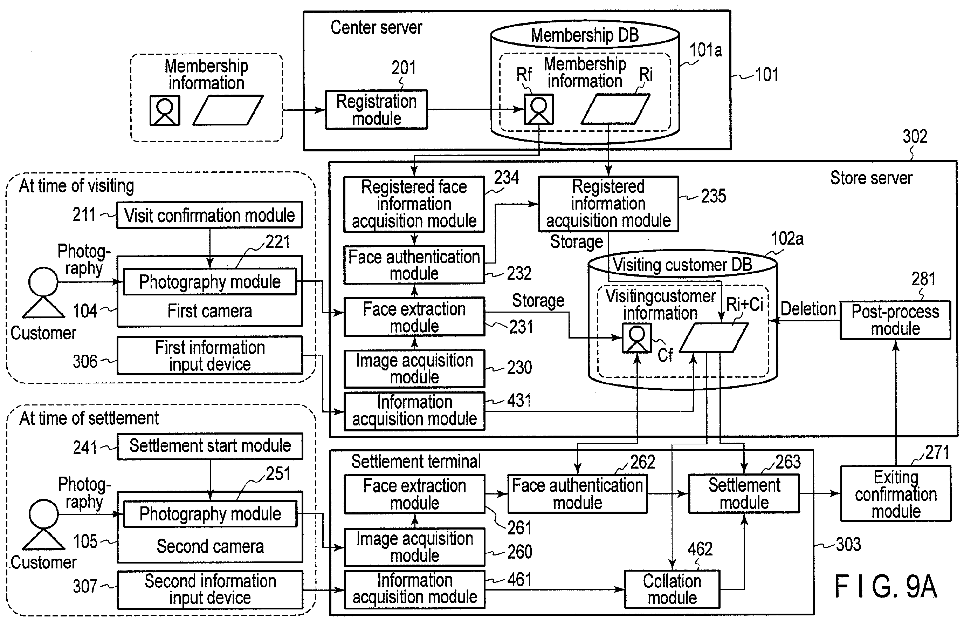

FIG. 9A is a view for describing the process functions by the information processing system of the second embodiment.

Incidentally, in FIG. 9A, the same functions as illustrated in FIG. 3A are denoted by the same reference numerals. In FIG. 9A, a detailed description of the process functions denoted by the same reference numerals as in FIG. 3B is omitted.

The store server 302 includes an information acquisition module 431 which stores information from the first information input device 306 in the visiting customer DB 102a as part of the visiting customer information. For example, if the first information input device 306 is the mobile terminal M, the information acquisition module 431 receives identification information (e.g. proper ID) from the mobile terminal M by wireless communication by the information input I/F 321. Upon receiving the proper ID from the mobile terminal M, the information acquisition module 431 stores the received proper ID in the visiting customer DB 102a. In addition, the information acquisition module 431 acquires, by the information input I/F 321, information (e.g. password) which was input to the key input terminal K1 functioning as the first information input device 306. Upon acquiring the password which was input to the key input terminal K1, the information acquisition module 431 stores the acquired password in the visiting customer DB 102a.

In addition, the settlement terminal 303 includes an information acquisition module 461 and a collation module 462. The information acquisition module 461 acquires identification information, other than face information, for identifying the visiting customer, which was input to the second information input device 307. For example, if the second information input device 307 is the mobile terminal M, the information acquisition module 461 receives identification information (e.g. proper ID) from the mobile terminal M by wireless communication by the information input I/F 331. Upon receiving the proper ID from the mobile terminal M, the information acquisition module 461 supplies the received proper ID to the collation module 462. Besides, if the second information input device 307 is the key input terminal K2, the information acquisition module 461 acquires, by the information input I/F 331, information (e.g. password) which was input to the key input terminal K2. Upon acquiring the password which was input to the key input terminal K2, the information acquisition module 461 supplies the acquired password to the collation module 462.

Furthermore, the collation module 462 collates the identification information, which the information acquisition module 461 acquires, and the identification information of the visiting customer, which the visiting customer DB 102a stores. Upon being supplied with the identification information from the information acquisition module 461, the collation module 462 searches, from the visiting customer DB 102a, the identification information of the visiting customer which agrees with the supplied identification information.

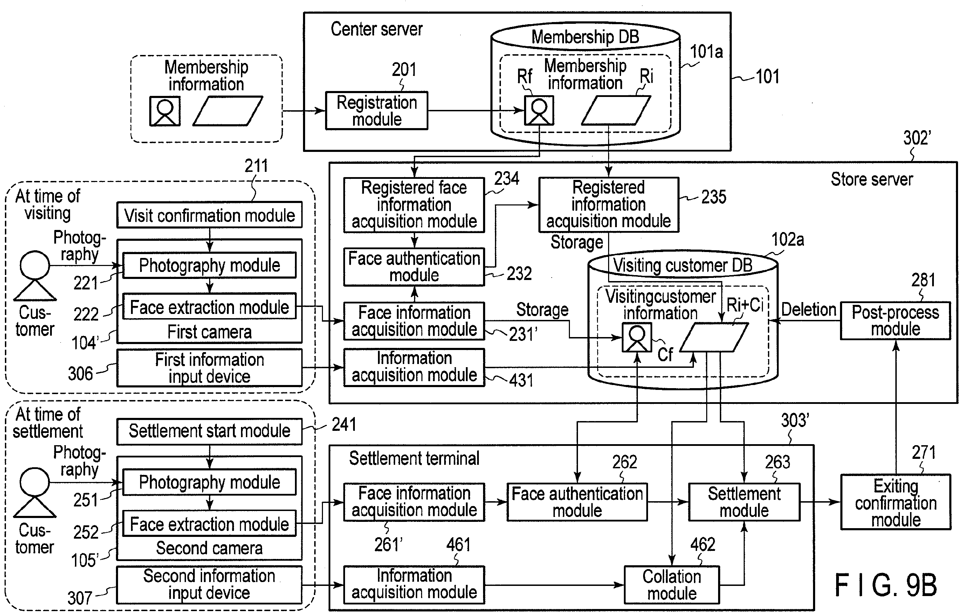

FIG. 9B is a view illustrating a modification of the process functions by the information processing system of the second embodiment illustrated in FIG. 9A. Incidentally, in FIG. 9B, the same structural parts as in FIG. 9A are denoted by the same reference numerals, and a detailed description is omitted.

A first camera 104' illustrated in FIG. 9B includes a face extraction module 222 in addition to the configuration of the first camera 104 illustrated in FIG. 9A. A second camera 105' illustrated in FIG. 9B includes a face extraction module 252 in addition to the configuration of the second camera 105 illustrated in FIG. 9A. In addition, a store server 302' illustrated in FIG. 9B includes a face information acquisition module 231' in place of the image acquisition module 230 and face extraction module 231 of the store server 302 illustrated in FIG. 9A. Furthermore, a settlement terminal 303' illustrated in FIG. 9B includes a face information acquisition module 261' in place of the image acquisition module 260 and face extraction module 261 of the settlement terminal 303 illustrated in FIG. 9A.

Incidentally, the face extraction module 222, face extraction module 252, face information acquisition module 231' and face information acquisition module 261' illustrated in FIG. 9B are realizable by the same configuration as in FIG. 3B.

In addition, the information processing system of the second embodiment may be realized by combining the configuration illustrated in FIG. 9A and the configuration illustrated in FIG. 9B. For example, in the information processing system, the first camera and store server may have the configuration of FIG. 9A, and the second camera and settlement terminal may have the configuration of FIG. 9B. In addition, in the information processing system, the first camera and store server may have the configuration of FIG. 9B, and the second camera and settlement terminal may have the configuration of FIG. 9A.

Besides, the description below mainly assumes the configuration example illustrated in FIG. 9A.

Next, a description is given of the flow of an information storage process in the information processing system of the second embodiment.

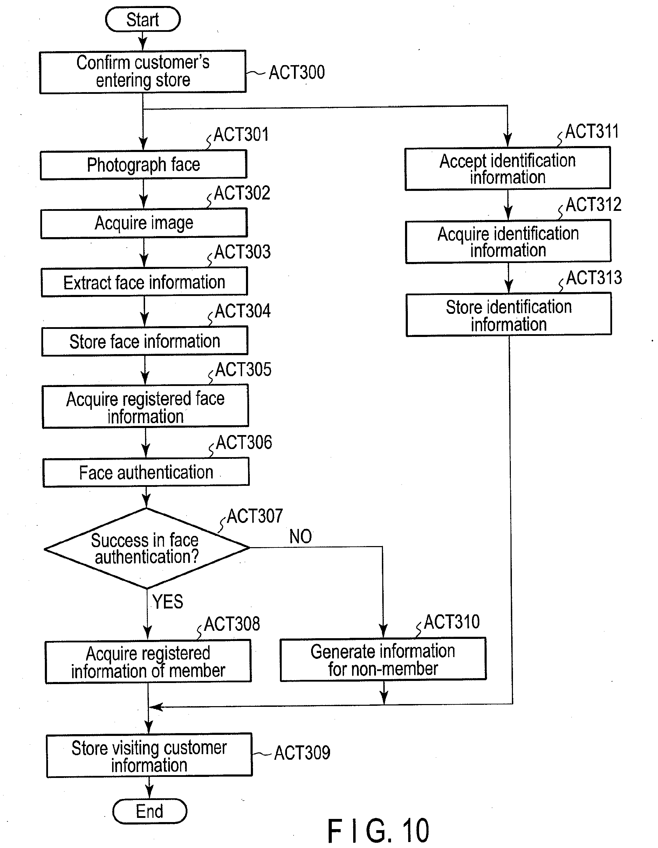

FIG. 10 is a flowchart for describing the flow of the information storage process in the information processing system of the second embodiment.

In the example of the information storage process illustrated in FIG. 10, the information processing system executes in parallel a process of storing a visiting customer's face information and a process of storing identification information which the visiting customer inputs. Specifically, upon receiving a notification of the entering of a customer from the visit confirmation module 211, the first camera 104 photographs a face image or images of the customer (visiting customer) who entered the store (ACT 301). The first camera 104 supplies to the store server 302 the photography image or images (the information including the face information) capturing the face of the visiting customer. In parallel to the photography by the first camera 104, the first information input device 306 accepts an input of identification information Ci from the visiting customer (ACT 311). The first information input device 306 supplies the identification information Ci which the visiting customer inputs, or identification information Ci which the visiting customer presets, to the store server 302.

The processor 121 of the store server 302 executes in parallel a process (ACT 302) of acquiring the photography image or images from the first camera 104 and a process (ACT 312) of acquiring the identification information from the first information input device 306.

Specifically, the processor 121 of the store server 302 acquires the photography image or images (the information including the face information) from the first camera 104 via the camera I/F 124 by the function of the face extraction module 231 (ACT 302). The processor 121 extracts the face information Cf of the visiting customer from the photography image or images acquired by the function of the face extraction module 231 (ACT 303). If the processor 121 successfully extracted the face information Cf of the visiting customer from the photography image or images of the first camera 104, the processor 121 stores the extracted face information Cf in the visiting customer DB 102a (ACT 304).

In the meantime, in the case of the configuration illustrated in FIG. 9B, the store server 302' acquires from the first camera 104' the face information extracted from the photography image or images.

In addition, the processor 121 of the store server 302 acquires the identification information Ci of the visiting customer from the first information input device 306 via the information input I/F 321 by the function of the information acquisition module 431 (ACT 312). The identification information Ci of the visiting customer may be a proper ID which is received from the mobile terminal M functioning as the first information input device 306, or may be a password which the visiting customer himself/herself inputs to the key input terminal K1. If the processor 121 successfully acquired the identification information Ci of the visiting customer from the first information input device 306, the processor 121 stores the acquired identification information Ci in the visiting customer DB 102a (ACT 313).

In addition, upon acquiring the face information Cf of the visiting customer, the processor 121 executes a face authentication process between the face information Cf of the visiting customer and the registered face information Rf of the membership DB 101a by the functions of the face authentication module 232 and registered face information acquisition module 234. For example, the processor 121 acquires a plurality of pieces of registered face information Rf, which are objects of face collation, from the membership DB 101a of the center server 101 by the function of the registered face information acquisition module 234 (ACT 305). The processor 121 executes, by the function of the face authentication module 232, face authentication (face collation of 1:N) between the face information Cf of the visiting customer and each acquired piece of registered face information Rf (ACT 306). The processor 121 determines whether the face authentication was successful or not, according to whether the registered face information Rf, which can be identified as the face information Cf of the visiting customer (i.e. determined as the identical person), is present or not (ACT 307).

If the face authentication was successful (ACT 307, YES), the processor 121 acquires, by the function of the registered information acquisition module 235, registered information Ri of the member, which corresponds to the registered face information Rf identified as the face information Cf of the visiting customer (ACT 308). Upon acquiring the registered information Ri of the member, the processor 121 associates the acquired registered information Ri, together with the identification information Ci of the visiting customer, with the face information Cf of the visiting customer, and stores the associated information as visiting customer information in the visiting customer DB 102a (ACT 309).

In addition, if the face authentication failed (ACT 307, NO), the processor 121 deems that the visiting customer is not registered as a member, and executes an exceptional process (non-membership process). For example, if the face authentication failed, the processor 121 generates registered information for a non-member for the visiting customer (ACT 310). The processor 121 associates the registered information of the non-member, together with the identification information Ci of the visiting customer, with the face information Cf of the visiting customer, and stores the associated information as non-membership visiting customer information in the visiting customer DB 102a (ACT 309).

In the meantime, the center server 101 may execute the face authentication process between the face information Cf of the visiting customer and the registered face information Rf. In this case, the processor 121 of the store server 302 executes, as a process taking the place of ACT 305 to ACT 308, a process of requesting the center server 101 to execute face authentication, and acquiring a result of the face authentication. For example, the processor 121 sends to the center server 101 the face information Cf of the visiting customer together with a request for the face authentication between the face information Cf of the visiting customer and the registered face information Rf. After requesting the face authentication, the processor 121 acquires from the center server 101 the registered information Ri corresponding to the registered face information Rf identified as the face information Cf of the visiting customer, or the notification of the failure of the face authentication.

According to the above-described information storage process, the store server can store the face information of the visiting customer, who actually visited the store, the identification information which the customer designates, and the registered information of the customer in the visiting customer DB as the visiting customer information. In addition, the face authentication process between the face information of the visiting customer and the registered face information of the registered member is executable during the period until the customer performs a settlement. Thus, even in an operation mode in which the number of members is very large and the face authentication process needs much time, the information processing system can execute the process by effectively utilizing the time in which the customer is present on the salesfloor for shopping, etc. As a result, the information processing system can avoid degradation in services, such as waiting to enter the store due to a wait for the completion of a face authentication process at the time of entering.

Next, a description is given of a settlement process in the information processing system of the second embodiment.

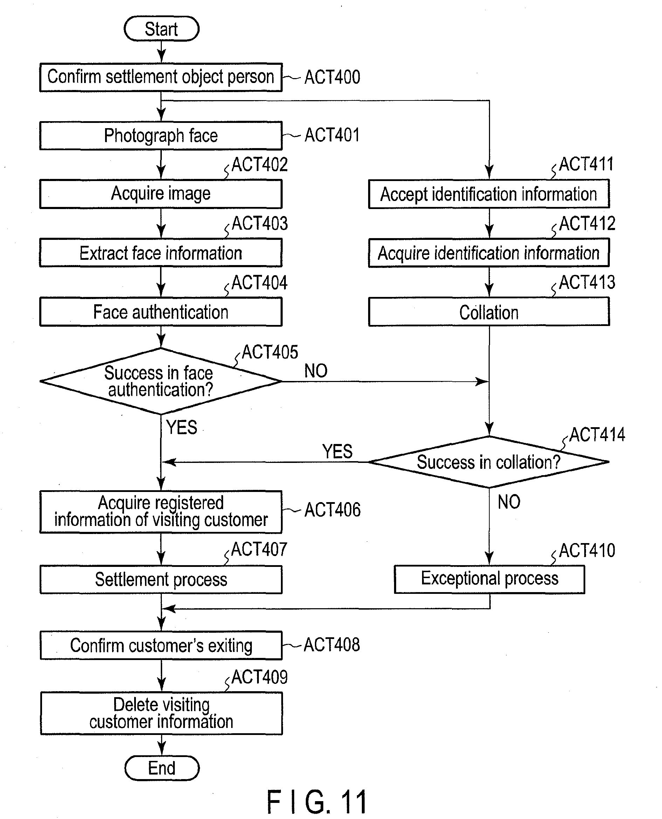

FIG. 11 is a flowchart for describing the flow of a first process example as a settlement process in the information processing system according to the second embodiment.

In the example of the settlement process illustrated in FIG. 11, the information processing system executes in parallel the face authentication by the face information of a person of settlement and the authentication (collation) process by the identification information which the person of settlement inputs. Specifically, if the settlement start module 241 detects a settlement start (ACT 400), the second camera 105 photographs the face of the person of settlement (ACT 401). The second camera 105 supplies the photography image or images (the information including face information), which captures the face of the person of settlement, to the store server 302. In addition, in parallel to the photography by the second camera 105, the second information input device 307 accepts an input of identification information from the visiting customer (ACT 411). The second information input device 307 supplies the identification information, which the visiting customer inputs, to the settlement server 303.

The processor 131 of the settlement terminal 303 acquires the photography image or images (the information including the face information) from the second camera 105 via the camera I/F 134 (ACT 402). Upon acquiring the photography image or images, the processor 131 extracts the face information of the person of settlement from the acquired photography image or images (ACT 403). In the meantime, in the case of the configuration illustrated in FIG. 9B, the settlement terminal 303' acquires from the second camera 105' the face information extracted from the photography image or images. If the processor 131 successfully extracted the face information of the person of settlement, the processor 131 executes face authentication between the face information of the person of settlement and the face information Cf of the visiting customer (ACT 404). The processor 131 determines whether the face authentication was successful or not, according to whether the face information Cf of the visiting customer, which can be identified as the face information of the person of settlement (i.e. determined as the identical person), is present or not (ACT 405).

If the face authentication was successful (ACT 405, YES), the processor 131 acquires, by the function of the settlement module 263, registered information Ri corresponding to the face information Cf of the visiting customer, which was identified as the face information of the person of settlement (ACT 406). Upon acquiring the registered information Ri, the processor 131 executes a normal settlement process by using the acquired registered information Ri (ACT 407). As the normal settlement process, the process, which was described as the settlement process of ACT 207 of FIG. 5 in the first embodiment, is executable.

The exiting confirmation module 271 confirms that a customer exited the store (ACT 408). Upon receiving the confirmation information of exiting from the exiting confirmation module 271, the processor 121 of the store server 302 deletes the visiting customer information of the customer, who exited the store, from the visiting customer DB 102a (ACT 409).

In addition, the processor 131 of the settlement terminal 303 acquires the identification information of the person of settlement from the second information input device 307 via the information input I/F 331 by the function of the information acquisition module 461 (ACT 412). The identification information of the person of settlement may be a proper ID which is received from the mobile terminal M functioning as the second information input device 307, or may be a password which the person of settlement himself/herself inputs to the key input terminal K2. Upon acquiring the identification information from the second information input device 307, the processor 131 collates the acquired identification information with the identification information Ci of the visiting customer, which the visiting customer DB 102a stores (ACT 413). The above-described process of ACT 411 to ACT 413 is executed in parallel with the process of ACT 401 to ACT 407.

If the face authentication failed (ACT 405, NO), the processor 131 confirms a collation result of the identification information (ACT 414). If the collation of the identification information was successful (ACT 414, YES), the processor 131 acquires the registered information Ri corresponding to the identification information Ci of the visiting customer which agrees with the acquired identification information (ACT 406). Upon acquiring the registered information Ri, the processor 131 executes the normal settlement process by using the acquired registered information Ri (ACT 407).

In addition, if the face authentication failed and also the collation of the identification information failed (ACT 414, NO), the processor 131 executes a settlement process by a predetermined exceptional process for the person of settlement (ACT 410). As the settlement process by the exceptional process, the process described in ACT 210 is applicable.

In the meantime, the store server 302 may execute the above-described collation process of the identification information which the person of settlement inputs. In this case, the processor 131 of the settlement terminal 303 executes, as a process taking the place of ACT 411 to ACT 414, a process of requesting the store server 302 to execute the collation of the identification information, and acquiring a result of the collation. For example, the processor 131 sends to the store server 302 a request for the collation between the acquired identification information and the identification information stored as the visiting customer information. The processor 131 may acquire, as a collation result of the identification information, the registered information of the visiting customer with which the identification information agrees, or a notification of the failure of the collation of the identification information.

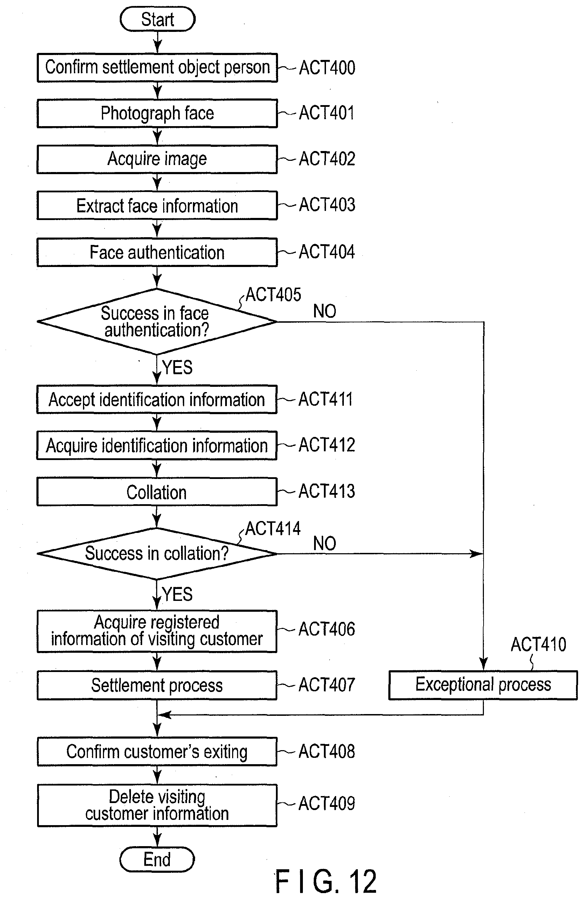

FIG. 12 is a flowchart for describing the flow of a second process example as a settlement process in the information processing system according to the second embodiment.

In the example of the settlement process illustrated in FIG. 12, the information processing system executes the authentication (collation) process by the identification information which the person of settlement inputs, following the face authentication by the face information of a person of settlement.

Specifically, if the settlement start module 241 detects a settlement start (ACT 400), the second camera 105 photographs the face of the person of settlement (ACT 401). The second camera 105 supplies the photography image or images, which captures the face of the person of settlement, to the store server 302.

The processor 131 of the settlement terminal 303 acquires the photography image or images from the second camera 105 via the camera I/F 134 (ACT 402). Upon acquiring the photography image or images, the processor 131 extracts the face information of the person of settlement from the acquired photography image or images (ACT 403).

If the processor 131 successfully extracted the face information of the person of settlement, the processor 131 executes face authentication between the face information of the person of settlement and the face information Cf of the visiting customer (ACT 404). The processor 131 determines whether the face authentication was successful or not, according to whether the face information Cf of the visiting customer, which can be identified as the face information of the person of settlement (i.e. determined as the identical person), is present or not (ACT 405).

If the face authentication was successful (ACT 405, YES), the second information input device 307 accepts an input of identification information from the visiting customer (ACT 411). The second information input device 307 supplies the identification information, which the visiting customer inputs, to the settlement terminal 303. The processor 131 of the settlement terminal 303 acquires the identification information of the person of settlement from the second information input device 307 via the information input I/F 331 by the function of the information acquisition module 461 (ACT 412). Upon acquiring the identification information from the second information input device 307, the processor 131 collates the acquired identification information with the identification information Ci of the visiting customer, which the visiting customer DB 102a stores (ACT 413).

In the meantime, the above-described process of ACT 411 to ACT 413 may be executed in parallel with the process of ACT 401 to ACT 407. In this case, the second information input device 307 accepts an input of the identification information in parallel with the photography by the second camera 105. If the face authentication failed (ACT 405, NO), the processor 131 of the settlement terminal 303 confirms a collation result of the identification information (ACT 414).

If the collation of the identification information was successful (ACT 414, YES), the processor 131 acquires the registered information Ri corresponding to the identification information Ci of the visiting customer which agrees with the acquired identification information (ACT 406). Upon acquiring the registered information Ri, the processor 131 executes the normal settlement process by using the acquired registered information Ri (ACT 407). As the normal settlement process, the process, which was described as the settlement process of ACT 207 of FIG. 5 in the first embodiment, is executable.

The exiting confirmation module 271 confirms that a customer exited the store (ACT 408). Upon receiving the confirmation information of exiting from the exiting confirmation module 271, the processor 121 of the store server 302 deletes the visiting customer information of the customer, who exited the store, from the visiting customer DB 102a (ACT 409).

If the face authentication failed (ACT 405, NO), of if the collation of the identification information failed (ACT 414, NO), the processor 131 executes a settlement process by a predetermined exceptional process for the person of settlement (ACT 410). As the settlement process by the exceptional process, the process described in ACT 210 is applicable.

In the above-described second embodiment, the first process example of the settlement process executes the input of identification information from the person of settlement by the second information input device, in parallel with the photography of the face of the person of settlement. The settlement terminal executes in parallel the face authentication by the face information of the person of settlement and the collation process by the identification information of the person of settlement. The settlement terminal executes the normal settlement process if the face authentication was successful, and executes, even if the face authentication failed, the normal settlement process if the collation process by the identification information was successful. By the settlement process illustrated in FIG. 11, the information processing system can provide the normal settlement process by the collation process by the identification information, even when the precision of face authentication was insufficient.

The second process example of the settlement process in the second embodiment sequentially executes the face authentication by the face information of the person of settlement and the collation of the identification information which the person of settlement inputs. Specifically, the information processing system enables a strict customer authentication process by executing the collation process by the identification information at a subsequent stage of the face authentication process.

Specifically, in the process illustrated in FIG. 12, the settlement terminal executes the normal settlement process using the registered information, only when the face authentication was successful and also the collation by the identification information was successful. In addition, the settlement terminal executes the settlement process as the exceptional process without using the registered information of the member, when the face authentication failed or the collation by the identification information failed. This process flow enables a strict settlement process of, e.g. purchase of goods, and a direct settlement process of debiting the price of the purchase process of goods from the customer's account.

In the meantime, in the process illustrated in FIG. 12, the process order of the process of ACT 401 to ACT 405 and the process of ACT 411 to ACT 414 may be reversed. In addition, the process of ACT 401 to ACT 405 and the process of ACT 411 to ACT 414 may be executed in parallel. When the process of ACT 401 to ACT 405 and the process of ACT 411 to ACT 414 are executed in parallel, the settlement terminal may determine the process content, based on the result of the face authentication and the collation result of the identification information.

Furthermore, the store server 302 may execute the above-described collation process of the identification information which the person of settlement inputs. In this case, the processor 131 of the settlement terminal 303 executes, as a process taking the place of ACT 411 to ACT 414, a process of requesting the store server 302 to execute the collation of the identification information, and acquiring a result of the collation. For example, the processor 131 sends to the store server 302 a request for the collation between the acquired identification information and the identification information stored as the visiting customer information. The processor 131 may acquire, as a collation result of the identification information, the registered information of the visiting customer with which the identification information agrees, or a notification of the failure of the collation of the identification information.

### (Third Embodiment)

Next, a third embodiment is described.

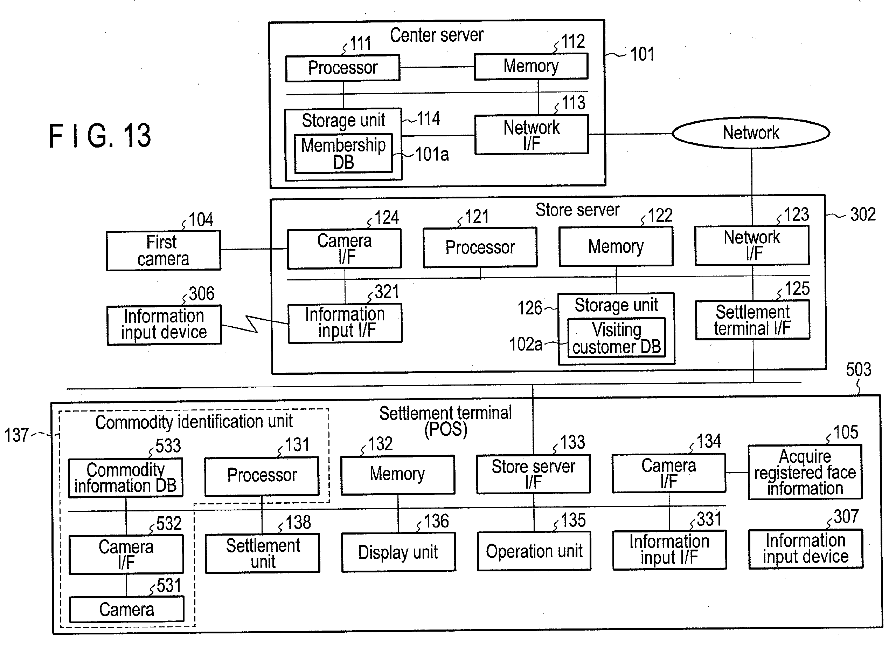

FIG. 13 is a block diagram illustrating a hardware configuration example of an information processing system according to the third embodiment.

The information processing system of the third embodiment illustrated in FIG. 13 includes a center server 101, a store server 302, a settlement terminal 503, a first camera 104, and a first information input device 306. In addition, in the example illustrated in FIG. 13, a second camera 105 and a second information input device 307 are formed integral with the settlement terminal 503. The second camera 105 and a second information input device 307 may be devices which are independent from the settlement terminal 503 and are connected to the settlement terminal 503 via an interface.

Since the center server 101, store server 302, first camera 104, second camera 105, first information input device 306 and second information input device 307 illustrated in FIG. 13 are realizable by components having the same functions as described in the first or second embodiment, the center server 101, store server 302, first camera 104, second camera 105, first information input device 306 and second information input device 307 are designated by the same reference numerals and a detailed description is omitted. In addition, as regards the structural components in the settlement terminal 503 illustrated in FIG. 6, those components, which are realizable by the same components as illustrated in FIG. 6, are designated by the same reference numerals and a detailed description is omitted. However, the information, which the memory 132 shown in FIG. 13 stores, is different from the information which the memory 132 shown in FIG. 6 stores. Besides, the functions, which the processor 131 shown in FIG. 13 realizes by executing the programs stored in the memory 132, are different from the functions which the processor 131 shown in FIG. 6 realizes.

The settlement terminal 503 illustrated in FIG. 13 has a structure including the settlement terminal 303 shown in FIG. 6, second camera 105 and second information input device 307. Specifically, the second camera 105 and second information input device 307 are integrally formed in the settlement terminal 503. The settlement terminal 503 includes a camera 531, a camera I/F 532 and a commodity information DB 533. The camera 531 is a camera for photographing commodities, and the camera I/F 532 is an interface for a connection to the camera 531. The commodity information DB 533 is a memory which stores information relating to commodities. In the settlement terminal 503, the camera 531, camera I/F 532, commodity information DB 533 and processor 131 function as a commodity identification unit 137.

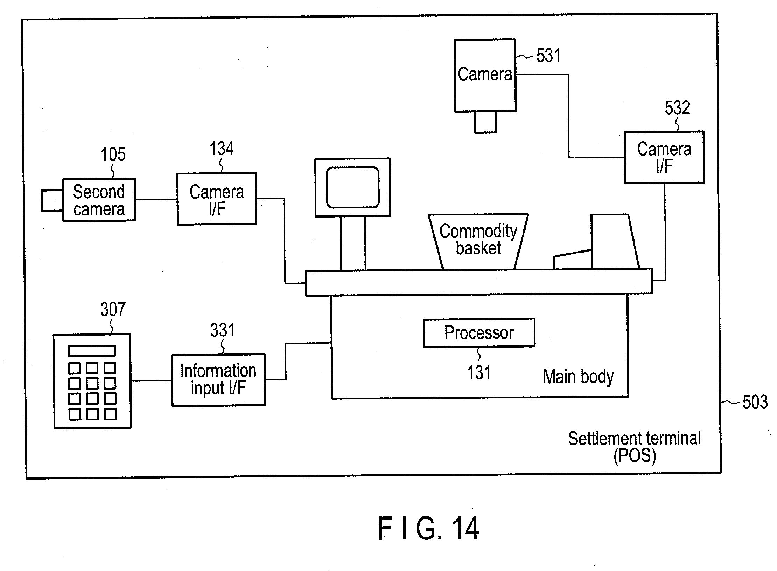

FIG. 14 is a view illustrating a configuration example of the settlement terminal 503.

As illustrated in FIG. 14, the settlement terminal 503 includes a main body which includes the processor 131. The second camera 105 connects to the main body of the settlement terminal 503 via the camera I/F 134. In addition, the key input terminal K2 functioning as the second information input device 307 connects to the main body of the settlement terminal 503 via the terminal I/F functioning as the information input I/F 331.

The camera 531 for photographing commodities connects to the main body of the settlement terminal 503 via the camera I/F 532. The settlement terminal 503 includes a table on which to place a commodity basket. The camera 531 photographs the inside of the commodity basket which is placed at a predetermined position on the table. A person of settlement sets the commodity basket, in which commodities to be purchased are put, at a predetermined position on the table.

The camera I/F 532 acquires an image or images of the inside of the commodity basket, which the camera 531 photographed. The processor 131 detects images of commodities and images of bar codes of the commodities from the image or images of the inside of the commodity basket. While referring to the information of the commodity information DB 533, the processor 131 recognizes the respective commodities in the commodity basket, based on the images of the bar codes of the commodities and the images of the commodities.

According to the configuration illustrated in FIG. 13 and FIG. 14, the settlement terminal 503 includes the commodity identification module 137 which recognizes, in a batchwise manner, a plurality of commodities which the customer presents. Thus, the settlement terminal 503 can save the labor and time for individually inputting commodity information (e.g. price) and individually scanning the commodities. The information processing system of the third embodiment can exhibit to the maximum the advantageous effect of the invention, which enables authentication in a short time, while saving the customer's labor, by face authentication, or by face authentication and identification information which is input at the time of entering the store.

Incidentally, the configuration example illustrated in FIG. 13 and FIG. 14 may be varied as needed. For example, the settlement terminal 503 may have a structure in which the first camera 104 is omitted. In this case, as described in the first and second embodiments, the first camera 104 may be replaced with a camera which is disposed, for example, at the entrance of the settlement corner. Additionally, the settlement terminal 503 may have a structure in which the second information input device 307 is omitted. The second information input device 307 may be a key input terminal which is disposed separately from the settlement terminal 503, or may be a mobile terminal which the customer possesses.

The above-described information processing system of the third embodiment can perform the same information storage process as in the second embodiment. Thus, as regards the information processing system of the third embodiment, a description of the information storage process is omitted.

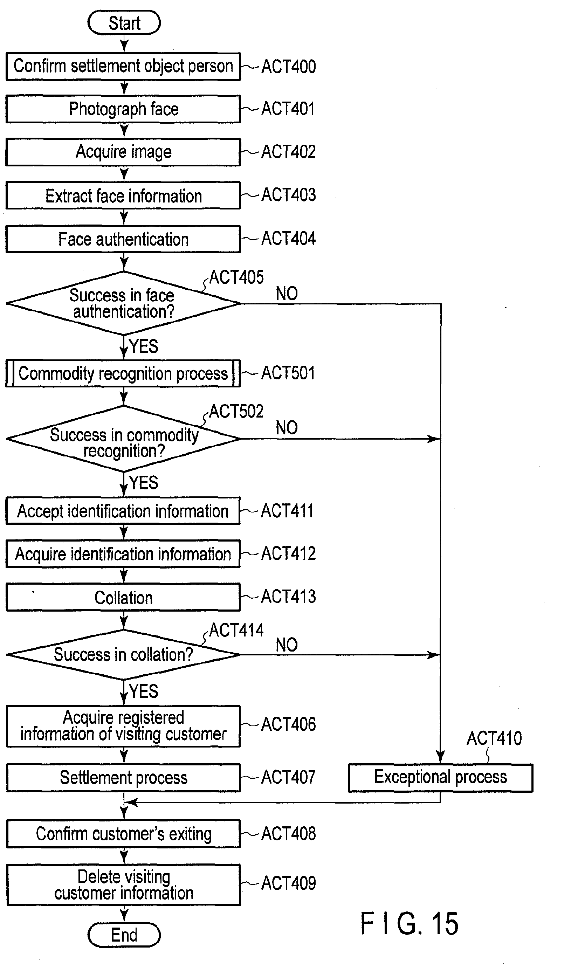

Next, a settlement process in the information processing system of the third embodiment is described. FIG. 15 is a flowchart for describing the flow of the settlement process in the information processing system according to the third embodiment.

In the settlement process illustrated in FIG. 15, a commodity recognition process is added to the settlement process illustrated in FIG. 12. Thus, in FIG. 15, the same process as in the process of FIG. 12 is designated by the same reference numerals, and a detailed description is omitted. For example, ACT 400 to ACT 405, ACT 411 to ACT 414, and ACT 406 to ACT 410 are realizable by the same process as the process of FIG. 12 described in the second embodiment.

In the settlement process illustrated in FIG. 15, if the face authentication was successful, the processor 131 of the settlement terminal 503 executes a commodity recognition process (ACT 501). The commodity recognition process is a process of recognizing all commodities which are objects of settlement, from the image or images including all commodities which the camera 531 photographs. If the commodity recognition process ends, the processor 131 determines whether the recognition of commodities was successful or not (ACT 502). If the processor 131 determines that the recognition of commodities was successful (ACT 502, YES), the processor 131 goes to personal authentication by collation of identification information which the person of settlement inputs. If the processor 131 determines that the recognition of commodities failed (ACT 502, NO), the processor 131 goes to the settlement process by the exceptional process.

Next, the commodity recognition process of ACT 501 is described.

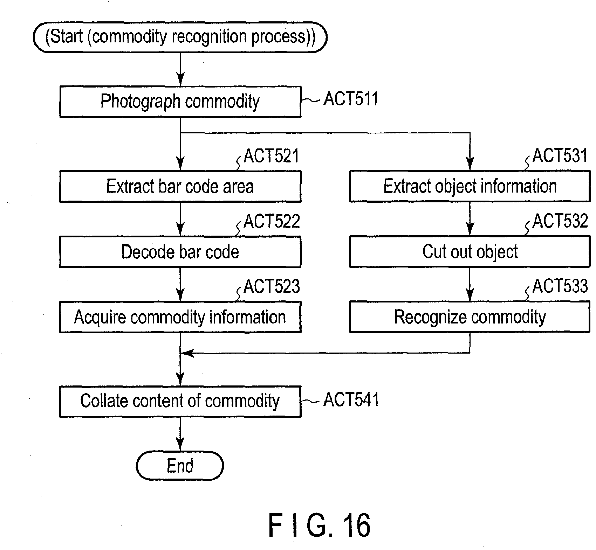

FIG. 16 is a flowchart for describing the commodity recognition process.

The processor 131 photographs, by the camera 531, an image or images including all commodities which are objects of settlement (ACT 511). For example, the camera 531 photographs the inside of the commodity basket which is set at a predetermined position. The processor 131 acquires the image or images, which the camera 531 photographed, via the camera I/F 532.

Upon acquiring the image or images (commodity images) which the camera 531 photographed, the processor 131 executes bar code area extraction for searching bar codes printed on commodities from the acquired commodity images (ACT 521). Upon extracting the bar code areas, the processor 131 decodes the bar codes in the extracted bar code areas (ACT 522). Upon decoding the bar codes, the processor 131 acquires commodity information of the commodities from the commodity information DB 533, based on the decoded result (ACT 523).

The processor 131 executes the process of ACT 521 to ACT 523 with respect to the bar codes of all commodities included in the commodity image or images. In addition, the processor 131 stores in the memory 132 the result of the commodity recognition by the process (bar code recognition process) of ACT 521 to ACT 523.

In addition, in parallel with the process (bar code recognition process) of ACT 521 to ACT 523, the processor 131 executes an object recognition process (ACT 531 to ACT 533). The processor 131 extracts a contour of a commodity shape as object information from the commodity image or images (ACT 531). Upon extracting the object information, the processor 131 executes object cutout of each commodity (ACT 532). Upon cutting out an object with respect to each commodity, the processor 131 recognizes each commodity by matching between the object information of each commodity and the commodity information which the commodity information DB 533 stores (ACT 533). The processor 131 executes the process of ACT 533 with respect to all commodity objects which are cut out from the commodity images. The processor 131 stores in the memory 132 the result of the commodity recognition by the object recognition process.

The processor 131 collates the result of the commodity recognition by the bar code recognition and the result of the commodity recognition by the object recognition (ACT 541). If the result of the bar code recognition and the result of the object recognition coincide, the processor 131 determines that the commodity recognition process was successful. If the result of the bar code recognition and the result of the object recognition do not coincide, the processor 131 determines that the commodity recognition process failed.

In the meantime, in the commodity recognition process illustrated in FIG. 16, either the process (commodity object recognition) of ACT 531 to ACT 533 or the process of ACT 521 to ACT 523 may be omitted. Besides, in the settlement process illustrated in FIG. 15, the process (collation of identification information) of ACT 411 to ACT 414 may be omitted.

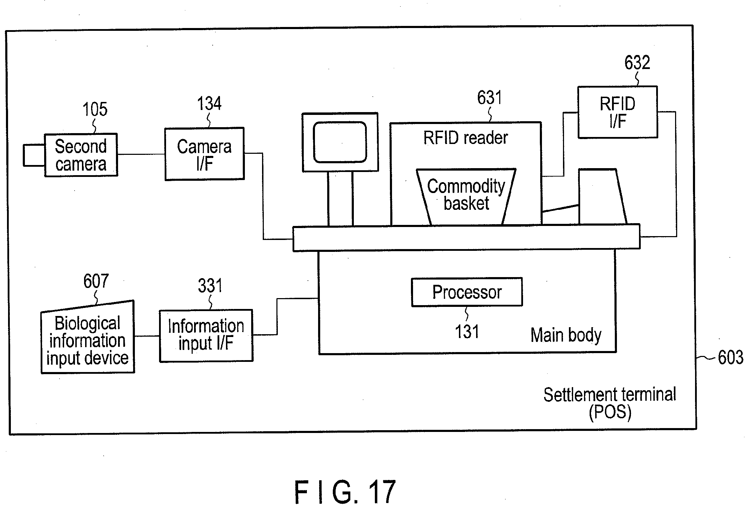

FIG. 17 is a view illustrating a modification of the information processing system according to the third embodiment.

An information processing system illustrated in FIG. 17 presupposes that RFID tags are attached to commodities. A settlement terminal 603 includes an RFID reader 631 which reads RFID tag information of respective commodities in a batchwise manner. The settlement terminal 603 illustrated in FIG. 17 is configured such that the camera 531 and camera I/F 532 in the configuration shown in FIG. 14 are replaced with the RFID reader 631 and an RFID interface 632.

In addition, FIG. 17 illustrates the example in which a biological information input device 607 is provided as the second information input device 307. The biological information input device 607 is configured to input biological information other than face information. The biological information input device 607 functioning as the second information input device 307 connects to the main body of the settlement terminal 603 via the information input I/F 331. Incidentally, when the second information input device 307 is the biological information input device 607, the first information input device 306 also needs to be a biological information input device.

In the information processing system with the configuration illustrated in FIG. 17, the commodity recognition process in the settlement process illustrated in FIG. 15 is a commodity recognition process based on reading of RFID tags by the RFID reader 631. For example, the RFID reader 631 is so set as to have a communication range covering the inside of the commodity basket that is set at a predetermined position. The processor 131 reads, by the RFID reader 631, information from the RFID tag which is attached to each commodity within the commodity basket. Based on the information read from each RFID tag, the processor 131 acquires the commodity information of each commodity from the commodity information DB 533. By this process, the settlement terminal 603 illustrated in FIG. 17 can recognize, in a batchwise manner, the commodities within the commodity basket of the person of settlement.

In addition, the configuration example illustrated in FIG. 17 employs biological information input devices as the first information input device 306 and second information input device 307. Thereby, the information processing system with the configuration shown in FIG. 17 can save the customer's labor of, for example, inputting a password. For example, according to biometrics authentication such as fingerprint authentication using biological information other than face information, the authentication of the customer can precisely be implemented by simply causing the biological information input device to read the biological information.

In the meantime, if the identification information, which the first and second information input devices input, is the customer's biological information, there is no need to input biological information of a visiting customer each time the customer enters the store. For example, if biological information other than face information was also registered in advance as the registered information Ri of the membership information, a work of inputting biological information at a time of entering is needless. Specifically, if biological information other than face information was registered in advance as the registered information Ri, the settlement terminal 603 can collate the biological information, which is input by the biological information input device 607, and the biological information of the registered information Ri.

The information processing system of the above-described third embodiment can provide the settlement process including the commodity recognition process which can recognize a plurality of commodities in a batchwise manner. Thereby, the third embodiment can provide the information processing system which enables self-checkout of commodities which are recognized by a high-speed batchwise commodity recognition process using the registered information of the member who is identified by face authentication.

As described above, the information processing system of each embodiment can execute, while the customer is doing shopping, the process of identifying the customer by face authentication from the membership information of the membership DB. As a result, the information processing system can reduce the processing time relating to the face authentication of the customer in the settlement process, and can execute the quick settlement process.

In addition, the information processing system of each embodiment stores in the visiting customer DB the customer information of the member identified by the face authentication between the visiting customer's face information acquired at the time of entering the store and the face information of the member. The information processing system of each embodiment can reduce, in the settlement process, the number of objects (population) of the face collation process from the number of registered members to the number of visiting customers, by collating the face information of the person of settlement and the face information of the visiting customer DB. As a result, the information processing system of each embodiment can reduce the processing time in the settlement process, and can enhance the prevision.

Furthermore, the information processing system of each embodiment stores in the visiting customer DB the customer information of the member identified by the face authentication, in association with the face information of the visiting customer. The information processing system can execute face authentication with high precision, since a time difference between the face information at the time of settlement and the face information at the time of entering the store is less than a time difference between the face information at the time of settlement and the face information at the time of membership registration.

Basic configuration examples in the information processing systems of the above-described embodiments are summarized below.
[1] An information processing system according to an embodiment includes a first face information acquisition module, a registered face information acquisition module, a first face authentication module, a registered information acquisition module, a visiting customer information storage module, a second face information acquisition module, a second face authentication module, a settlement module, and a deletion module. The first face information acquisition module acquires a face information of a visiting customer as first face information. The registered face information acquisition module acquires registered face information of a member, which is collated with the first face information. The first face authentication module authenticates which member is the visiting customer of the first face information, by collating the first face information and the registered face information of each member. The registered information acquisition module acquires registered information of a member corresponding to the registered face information which was successfully authenticated with the first face information. The visiting customer information storage module stores, in a storage unit, visiting customer information which associates the first face information and the registered information acquired by the registered information acquisition module. The second face information acquisition module acquires face information of a person of settlement as second face information. The second face authentication module authenticates which visiting customer is the person of settlement of the second face information, by collating the first face information stored in the storage unit and the second face information acquired by the second face information acquisition module. The settlement module settles a price which the person of settlement is to settle, based on the registered information corresponding to the first face information which was successfully authenticated with the second face information. The deletion module deletes from the storage unit the visiting customer information, with respect to which the settlement module completed settlement.
[2] The information processing system of the above [1] further includes a first photography module which photographs a face of a visiting customer, and the first face information acquisition module acquires an image or images which the first photography module photographed.
[3] The information processing system of the above [1] further includes a second photography module which photographs a face of a person of settlement, and the second face information acquisition module acquires an image or images which the second photography module photographed.
[4] The information processing system of the above [1] further includes a first identification information acquisition module, a second identification information acquisition module, and a collation module. The first identification information acquisition module acquires first identification information for identifying the visiting customer of the first face information. The second identification information acquisition module acquires second identification information for identifying the person of settlement of the second face information. The collation module collates the first identification information and the second identification information.
[5] In the information processing system of the above [4], the first identification information acquisition module receives the first identification information from a wireless communication device by wireless communication, and the second identification information acquisition module receives the second identification information from a wireless communication device by wireless communication.
[6] In the information processing system of the above [4], each of the first identification information and the second identification information is a password which the customer sets.
[7] In the information processing system of the above [4], each of the first identification information and the second identification information is biometrics authentication information other than face information of the customer.
[8] The information processing system of the above [1] further includes a commodity recognition module which recognizes commodities, which the customer purchases, in a batchwise manner, and the settlement module settles a purchase price of the commodities which the commodity recognition module recognized.
[9] In the information processing system of the above [8], the commodity recognition module decodes a bar code which is attached to each commodity extracted from a commodity image or images which is/are captured by photographing an image or images including all commodities that are objects of purchase.

In each of the above-described embodiments, the case was described in which the programs that the processor executes are prestored in the memory in the apparatus. However, the programs which the processor executes can be downloaded in the apparatus through a network, or can be installed in the apparatus from a computer-readable storage medium. The form of the computer-readable storage medium can be any form, such as a CD-ROM, as long as the computer-readable storage medium can store programs and is readable by the apparatus. In addition, the functions obtained by installation or download in advance can be realized in cooperation with an OS (Operating System) or the like in the apparatus.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the framework of the inventions. The accompanying claims and their equivalents are intended to cover such forms or modifications as would fall within the scope of the inventions.

## Claims

1. An information processing system comprising:
a first interface configured to acquire information including face information of a visitor;
a first processor configured to execute face authentication between the face information of the visitor included in the information acquired by the first interface and registered face information of each of members registered in a membership database, and to store, in a visitor database, registered information of a member corresponding to the registered face information which was successfully authenticated with the face information of the visitor, in association with the face information of the visitor;
wherein said information processing system further comprises:
a second interface configured to acquire information including face information of a person of settlement; and
a settlement terminal configured to execute a settlement of an amount of money and comprising
a second processor configured to execute face authentication between the face information of said person of settlement included in the information acquired by the second interface and the face information of the visitor which the visitor database stores, and to execute a settlement process by using the registered information of the member corresponding to the face information of the visitor which was successfully authenticated with the face information of the person of settlement, **characterized in that**
the first interface comprises a camera I/F (124) for a connection to a first camera (104) that is disposed near the entrance of the store and configured to photograph the face of the visitor; and
the second interface comprises a camera I/F (134) for a connection to a second camera (105) that is disposed near the entrance of the settlement corner and configured to photograph the face of the person of settlement.

2. The information processing system of Claim 1, wherein the second processor is configured to delete from the visitor database the face information of a visitor who completed settlement and the information corresponding to the face information of the visitor.

3. The information processing system of Claim 1 or 2, wherein the first camera is configured to photograph an image or images including a face of a visitor, and to extract face information from the photographed image or images,
wherein the first processor is configured to execute face authentication between the face information of the visitor, which was extracted from the image or images that the first camera photographed, and the registered face information.

4. The information processing system of any one of Claims 1 to 3, wherein the second camera is configured to photograph an image or images including a face of a person of settlement, and to extract face information from the photographed image or images,
wherein the second processor is configured to execute face authentication between the face information of the person of settlement, which was extracted from the image or images that the second camera photographed, and the registered face information.

5. The information processing system of any one of Claims 1 to 4, further comprising:
a first information input interface configured to acquire first identification information which identifies the visitor; and
a second information input interface configured to acquire second identification information which identifies the person of settlement,
wherein the second processor is configured to confirm that the visitor and the person of settlement are an identical person, by collation between the first identification information and the second identification information.

6. The information processing system of Claim 5, wherein each of the first and second information input interfaces is an interface configured to execute wireless communication, and to receive the first identification information and the second identification information from a wireless communication device by wireless communication.

7. The information processing system of Claim 5 or 6, wherein the first information input interface is configured to acquire as the first identification information a password which the visitor inputs, and
the second information input interface is configured to acquire as the second identification information a password which the person of settlement inputs.

8. The information processing system of any one of Claims 5 to 7, wherein each of the first and second information input interfaces is an interface configured to acquire any biological information other than face information, and
the second processor is configured to execute biometrics authentication between the biological information of the visitor, which the first information input interface acquires, and the biological information of the person of settlement, which the second information input interface acquires.

9. The information processing system of any one of Claims 1 to 8, further comprising a commodity recognition unit configured to recognize a plurality of commodities, which are objects of purchase by the person of settlement, in the settlement process,
wherein the second processor is configured to make settlement for the commodities recognized by the commodity recognition unit.

10. The information processing system of any one of Claims 1 to 9, wherein the settlement process using the registered information is configured to execute the settlement of the price by using credit settlement information included in the registered information or membership points saved in advance.

11. A computer-readable, non-transitory storage medium having stored thereon an information processing program including an information storage program executable by a computer,
the information storage program controlling the computer to execute functions of:
executing face authentication between face information of a visitor, which is included in information acquired by a first interface configured to acquire information including face information of a visitor, and registered face information of each of members registered in a membership database, the first interface comprising a camera I/F (124) for a connection to a first camera (104) that is disposed near the entrance of the store and configured to photograph the face of the visitor;; and
storing, in a visitor database, registered information of a member corresponding to the registered face information which was successfully authenticated with the face information of the visitor, in association with the face information of the visitor, and
wherein said computer-readable medium further comprises a settlement program which is executable by a computer,
said settlement program controlling the computer to execute functions of:
executing face authentication between face information of a person of settlement, which is included in information acquired by a second interface configured to acquire information including face information of a person of settlement, and the face information of the visitor which the visitor database stores, the second interface comprising a camera I/F (134) for a connection to a second camera (105) that is disposed near the entrance of the settlement corner and configured to photograph the face of the person of settlement; and
executing a settlement process by using the registered information of the member corresponding to the face information of the visitor which was successfully authenticated with the face information of the person of settlement.

## Patentansprüche

1. Datenverarbeitungssystem, umfassend:
eine erste Schnittstelle, die derart konfiguriert ist, dass sie Informationen, die Gesichtsdaten eines Besuchers umfassen, erfasst,
einen ersten Prozessor, der derart konfiguriert ist, dass er eine Gesichtsauthentifizierung zwischen den in den von der ersten Schnittstelle erfassten Daten enthaltenen Gesichtsdaten und registrierten Gesichtsdaten jedes der in einer Mitgliederdatenbank registrierten Mitglieder vornimmt und in einer Besucherdatenbank registrierte Informationen eines Besuchers, die den mit den Gesichtsdaten des Besuchers erfolgreich authentifizierten registrierten Gesichtsdaten entsprechen, im Zusammenhang mit den Gesichtsdaten des Besuchers speichert, wobei das Datenverarbeitungssystem ferner umfasst:
eine zweite Schnittstelle, die derart konfiguriert ist, dass sie Informationen, die Gesichtsdaten einer Abrechnungsperson enthalten, erfasst, und
ein Abrechnungsendgerät, das derart konfiguriert ist, dass es eine Abrechnung über einen Geldbetrag vornimmt, umfassend:
einen zweiten Prozessor, der derart konfiguriert ist, dass er eine Gesichtsauthentifizierung zwischen den in den von der zweiten Schnittstelle erfassten Informationen enthaltenen Gesichtsdaten der Abrechnungsperson und den in der Besucherdatenbank gespeicherten Gesichtsdaten des Besuchers vornimmt und einen Abrechnungsvorgang anhand der registrierten Daten des Mitglieds, die den mit den Gesichtsdaten der Abrechnungsperson erfolgreich authentifizierten registrierten Gesichtsdaten des Besuchers entsprechen, durchführt, **dadurch gekennzeichnet, dass**
die erste Schnittstelle eine Kameraschnittstelle (124) zum Anschließen an eine in der Nähe des Geschäftseingangs angeordnete, zum Fotografieren des Gesichts des Besuchers konfigurierte erste Kamera (104) umfasst und
die zweite Schnittstelle eine Kameraschnittstelle (134) zum Anschließen an eine in der Nähe Abrechnungsecke angeordnete, zum Fotografieren des Gesichts der Abrechnungsperson konfigurierte zweite Kamera (105) umfasst.

2. Datenverarbeitungssystem nach Anspruch 1, wobei der zweite Prozessor derart konfiguriert ist, dass er die Gesichtsdaten eines Besuchers, der die Abrechnung abgeschlossen hat, sowie die den Gesichtsdaten des Besuchers entsprechenden Informationen aus der Besucherdatenbank löscht.

3. Datenverarbeitungssystem nach Anspruch 1 oder 2, wobei die erste Kamera derart konfiguriert ist, dass sie mindestens ein Bild, das ein Gesicht eines Besuchers enthält, aufnimmt und aus dem mindestens einen aufgenommenen Bild Gesichtsdaten extrahiert,
wobei der erste Prozessor derart konfiguriert ist, dass er eine Gesichtsauthentifizierung zwischen den aus dem von der ersten Kamera aufgenommenen mindestens einen Bild extrahierten Gesichtsdaten des Besuchers und den registrierten Gesichtsdaten vornimmt.

4. Datenverarbeitungssystem nach einem der Ansprüche 1 - 3, wobei die zweite Kamera derart konfiguriert ist, dass sie mindestens ein Bild, das ein Gesicht einer Abrechnungsperson enthält, aufnimmt und aus dem mindestens einen aufgenommenen Bild Gesichtsdaten extrahiert,
wobei der zweite Prozessor derart konfiguriert ist, dass er eine Gesichtsauthentifizierung zwischen den aus dem von der zweiten Kamera aufgenommenen mindestens einen Bild extrahierten Gesichtsdaten der Abrechnungsperson und den registrierten Gesichtsdaten vornimmt.

5. Datenverarbeitungssystem nach einem der Ansprüche 1 - 4, ferner umfassend:
eine erste Dateneingabeschnittstelle, die zur Erfassung erster Erkennungsdaten, die den Besucher identifizieren, konfiguriert ist, und
eine zweite Dateneingabeschnittstelle, die zur Erfassung zweiter Erkennungsdaten, die die Abrechnungsperson identifizieren, konfiguriert ist,
wobei der zweite Prozessor derart konfiguriert ist, dass er duch Zusammentragen der ersten Erkennungsdaten und der zweiten Erkennungsdaten bestätigt, dass der Besucher und die Abrechnungsperson eine und dieselbe Person sind.

6. The information processing system of Claim 5, wherein each of the first and second information input interfaces is an interface configured to execute wireless communication, and to receive the first identification information and the second identification information from a wireless communication device by wireless communication.

7. Datenverarbeitungssystem nach Anspruch 5 oder 6, wobei die erste Dateneingabeschnittstelle derart konfiguriert ist, dass sie ein vom Benutzer eingegebenes Passwort als erste Erkennungsdaten erfasst und
die zweite Dateneingabeschnittstelle derart konfiguriert ist, dass sie ein von der Abrechnungsperson eingegebenes Passwort als zweite Erkennungsdaten erfasst.

8. Datenverarbeitungssystem nach einem der Ansprüche 5-7, wobei jede der ersten und zweiten Dateneingabeschnittstellen eine Schnittstelle ist, die derart konfiguriert ist, dass sie beliebige biologische Daten außer Gesichtsdaten erfasst, und
der zweite Prozessor derart konfiguriert ist, dass er eine biometrische Authentifizierung zwischen den von der ersten Dateneingabeschnittstelle erfassten biologischen Daten des Besuchers und den von der zweiten Dateneingabeschnittstelle erfassten biologischen Daten der Abrechnungsperson vornimmt.

9. Datenverarbeitungssystem nach einem der Ansprüche 1 - 8, ferner umfassend eine Warenerkennungseinrichtung, die derart konfiguriert ist, dass sie beim Abrechnungsvorgang eine Mehrzahl Waren erkennt, bei denen es sich um von der Abrechnungsperson gekaufte Gegenstände handelt,
wobei der zweite Prozessor derart konfiguriert ist, dass er eine Abrechnung über die von der Warenerkennungseinrichtung erkannten Waren durchführt.

10. Datenverarbeitungssystem nach einem der Ansprüche 1 - 9, wobei der Abrechnungsvorgang, bei dem die registrierten Daten herangezogen werden, derart konfiguriert ist, dass er die Begleichung des Preises anhand von Kreditabrechnungsdaten, die in den registrierten Daten enthalten sind, oder Mitgliederpunkten, die im Voraus gespeichert wurden, durchführt.

11. Computerlesbarer, nicht flüchtiger Datenträger, auf dem ein Datenverarbeitungsprogramm gespeichert ist, das ein von einem Computer ausführbares Datenspeicherungsprogramm enthält:
wobei das Datenspeicherungsprogramm den Computer der Ausführung folgender Funktionen ansteuert:
Vornehmen einer Gesichtsauthentifizierung zwischen den in den von einer ersten Schnittstelle erfassten Daten enthaltenen Gesichtsdaten eines Besuchers und registrierten Gesichtsdaten jedes der in einer Mitgliederdatenbank registrierten Mitglieder, wobei die erste Schnittstelle eine Kameraschnittstelle (124) zum Anschließen an eine in der Nähe des Geschäftseingangs angeordnete, zum Fotografieren des Gesichts des Besuchers konfigurierte erste Kamera (104) umfasst und
Speichern von in einer Besucherdatenbank registrierten Informationen eines Besuchers, die den mit den Gesichtsdaten des Besuchers erfolgreich authentifizierten registrierten Gesichtsdaten entsprechen, im Zusammenhang mit den Gesichtsdaten des Besuchers und
wobei der computerlesbare Datenträger ferner ein Abrechungsprogramm umfasst, das von einem Computer ausführbar ist,
wobei das Abrechnungsprogramm den Computer der Ausführung folgender Funktionen ansteuert:
Vornehmen einer Gesichtsauthentifizierung zwischen den in den von einer zweiten Schnittstelle, die zur Erfassung von Daten, die Gesichtsdaten einer Abrechnungsperson enthalten, konfiguriert ist, erfassten Daten enthaltenen Gesichtsdaten einer Abrechnungsperson und registrierten Gesichtsdaten des Besuchers, die in der Besucherdatenbank gespeichert sind, wobei die zweite Schnittstelle eine Kameraschnittstelle (134) zum Anschließen an eine in der Nähe Abrechnungsecke angeordnete, zum Fotografieren des Gesichts der Abrechnungsperson konfigurierte zweite Kamera (105) umfasst.
Durchführen eines Abrechnungsvorgangs anhand der registrierten Daten des Mitglieds, die den mit den Gesichtsdaten der Abrechnungsperson erfolgreich authentifizierten registrierten Gesichtsdaten des Besuchers entsprechen.

## Revendications

1. Système de traitement d'informations comprenant :
une première interface configurée de manière à acquérir des informations incluant des informations de visage d'un visiteur ;
un premier processeur configuré de manière à exécuter une authentification de visage entre les informations de visage du visiteur, incluses dans les informations acquises par la première interface, et des informations de visage enregistrées de chacun des membres enregistrés dans une base de données de membres, et à stocker, dans une base de données de visiteurs, des informations enregistrées d'un membre correspondant aux informations de visage enregistrées qui ont été correctement authentifiées avec les informations de visage du visiteur, en association avec les informations de visage du visiteur ;
dans lequel ledit système de traitement d'informations comprend en outre :
une seconde interface configurée de manière à acquérir des informations incluant des informations de visage d'une personne chargée d'effectuer un règlement ; et
un terminal de règlement configuré de manière à exécuter un règlement d'une somme d'argent et comprenant :
un second processeur configuré de manière à exécuter une authentification de visage entre les informations de visage de ladite personne chargée d'effectuer le règlement, incluses dans les informations acquises par la seconde interface, et les informations de visage du visiteur stockées par la base de données de visiteurs, et à exécuter un processus de règlement en utilisant les informations enregistrées du membre correspondant aux informations de visage du visiteur qui ont été correctement authentifiées avec les informations de visage de la personne chargée d'effectuer le règlement, **caractérisé en ce que**
la première interface comprend une interface, I/F, de caméra (124) pour une connexion à une première caméra (104) qui est disposée près de l'entrée du magasin et configurée de manière à photographier le visage du visiteur ; et
la seconde interface comprend une interface, I/F, de caméra (134) pour une connexion à une seconde caméra (105) qui est disposée près de l'entrée de l'emplacement de règlement et configurée de manière à photographier le visage de la personne chargée d'effectuer le règlement.

2. Système de traitement d'informations selon la revendication 1, dans lequel le second processeur est configuré de manière à supprimer, de la base de données de visiteurs, les informations de visage d'un visiteur qui a complété un règlement, ainsi que les informations correspondant aux informations de visage du visiteur.

3. Système de traitement d'informations selon la revendication 1 ou 2, dans lequel la première caméra est configurée de manière à photographier une ou plusieurs images incluant un visage d'un visiteur, et à extraire des informations de visage de l'image ou des images photographiées ;
dans lequel le premier processeur est configuré de manière à exécuter une authentification de visage entre les informations de visage du visiteur, qui ont été extraites de l'image ou des images photographiées par la première caméra, et les informations de visage enregistrées.

4. Système de traitement d'informations selon l'une quelconque des revendications 1 à 3, dans lequel la seconde caméra est configurée de manière à photographier une image ou des images incluant un visage d'une personne chargée d'effectuer le règlement, et à extraire des informations de visage de l'image ou des images photographiées ;
dans lequel le second processeur est configuré de manière à exécuter une authentification de visage entre les informations de visage de la personne chargée d'effectuer le règlement, qui ont été extraites de l'image ou des images photographiées par la seconde caméra, et les informations de visage enregistrées.

5. Système de traitement d'informations selon l'une quelconque des revendications 1 à 4, comprenant en outre :
une première interface de saisie d'informations configurée de manière à acquérir des premières informations d'identification qui permettent d'identifier le visiteur ; et
une seconde interface de saisie d'informations configurée de manière à acquérir des secondes informations d'identification qui permettent d'identifier la personne chargée d'effectuer le règlement ;
dans lequel le second processeur est configuré de manière à confirmer que le visiteur et la personne chargée d'effectuer le règlement sont une seule et même personne, par le biais d'un collationnement entre les premières informations d'identification et les secondes informations d'identification.

6. Système de traitement d'informations selon la revendication 5, dans lequel chacune des première et seconde interfaces de saisie d'informations correspond à une interface configurée de manière à exécuter une communication sans fil, et à recevoir les premières informations d'identification et les secondes informations d'identification en provenance d'un dispositif de communication sans fil, par le biais d'une communication sans fil.

7. Système de traitement d'informations selon la revendication 5 ou 6, dans lequel la première interface de saisie d'informations est configurée de manière à acquérir, en tant que les premières informations d'identification, un mot de passe saisi par le visiteur ; et
la seconde interface de saisie d'informations est configurée de manière à acquérir, en tant que les secondes informations d'identification, un mot de passe saisi par la personne chargée d'effectuer le règlement.

8. Système de traitement d'informations selon l'une quelconque des revendications 5 à 7, dans lequel chacune des première et seconde interfaces de saisie d'informations correspond à une interface configurée de manière à acquérir des quelconques informations biologiques distinctes des informations de visage ; et
le second processeur est configuré de manière à exécuter une authentification biométrique entre les informations biologiques du visiteur, acquises par la première interface de saisie d'informations, et les informations biologiques de la personne chargée d'effectuer le règlement, acquises par la seconde interface de saisie d'informations.

9. Système de traitement d'informations selon l'une quelconque des revendications 1 à 8, comprenant en outre une unité de reconnaissance de marchandises configurée de manière à reconnaître une pluralité de marchandises, lesquelles correspondent à des objets d'achats effectués par la personne chargée d'effectuer le règlement, dans le cadre du processus de règlement ;
dans lequel le second processeur est configuré de manière à effectuer le règlement des marchandises reconnues par l'unité de reconnaissance de marchandises.

10. Système de traitement d'informations selon l'une quelconque des revendications 1 à 9, dans lequel le processus de règlement utilisant les informations enregistrées est configuré de manière à effectuer le règlement du prix en faisant appel à des informations de règlement de crédit incluses dans les informations enregistrées ou à des points d'adhésion enregistrés à l'avance.

11. Support de stockage non transitoire lisible par ordinateur sur lequel est stocké un programme de traitement d'informations incluant un programme de stockage d'informations exécutable par un ordinateur ;
le programme de stockage d'informations commandant à l'ordinateur d'exécuter les fonctions suivantes consistant à :
exécuter une authentification de visage entre des informations de visage d'un visiteur, incluses dans des informations acquises par une première interface configurée de manière à acquérir des informations incluant des informations de visage d'un visiteur, et des informations de visage enregistrées de chacun des membres enregistrés dans une base de données de membres, la première interface comprenant une interface, I/F, de caméra (124) pour une connexion à une première caméra (104) qui est disposée près de l'entrée du magasin et configurée de manière à photographier le visage du visiteur ; et
stocker, dans une base de données de visiteurs, des informations enregistrées d'un membre correspondant aux informations de visage enregistrées qui ont été correctement authentifiées avec les informations de visage du visiteur, en association avec les informations de visage du visiteur ; et
dans lequel ledit support lisible par ordinateur comprend en outre un programme de règlement qui est exécutable par un ordinateur ;
ledit programme de règlement commandant à l'ordinateur d'exécuter les fonctions suivantes consistant à :
exécuter une authentification de visage entre des informations de visage d'une personne chargée d'effectuer un règlement, qui sont incluses dans des informations acquises par une seconde interface configurée de manière à acquérir des informations incluant des informations de visage d'une personne chargée d'effectuer un règlement, et les informations de visage du visiteur stockées par la base de données de visiteurs, la seconde interface comprenant une interface, I/F, de caméra (134) pour une connexion à une seconde caméra (105) qui est disposée près de l'entrée de l'emplacement de règlement et configurée de manière à photographier le visage de la personne chargée d'effectuer le règlement ; et
exécuter un processus de règlement en utilisant les informations enregistrées du membre correspondant aux informations de visage du visiteur qui ont été correctement authentifiées avec les informations de visage de la personne chargée d'effectuer le règlement.
